(19) Europäisches Patentamt / European Patent Office / Office européen des brevets

(11) **EP 4 243 464 B1**

(12) **EUROPEAN PATENT SPECIFICATION**

(45) Date of publication and mention
of the grant of the patent:
**29.10.2025 Bulletin 2025/44**

(21) Application number: **21889337.8**

(22) Date of filing: **15.06.2021**

(51) International Patent Classification (IPC):
*H04W 4/40* (2018.01)   *H04W 4/12* (2009.01)
*H04W 4/021* (2018.01)   *H04W 4/02* (2018.01)
*B60W 40/02* (2006.01)   *G08G 1/00* (2006.01)
*G08G 1/01* (2006.01)   *G08G 1/04* (2006.01)
*G08G 1/0967* (2006.01)   *G08G 1/16* (2006.01)

(52) Cooperative Patent Classification (CPC):
**H04W 4/40; G08G 1/0116; G08G 1/04;
G08G 1/096775; G08G 1/164; G08G 1/166;
G08G 1/167; H04W 4/12;** B60W 2552/10;
B60W 2554/406; B60W 2554/802; B60W 2556/15;
B60W 2556/30; B60W 2556/45; B60W 2556/50;
(Cont.)

(86) International application number:
**PCT/KR2021/007431**

(87) International publication number:
**WO 2022/097869 (12.05.2022 Gazette 2022/19)**

(54) **METHOD FOR CONTROLLING DRIVING OF V2X VEHICLE BY FIRST DEVICE IN WIRELESS COMMUNICATION SYSTEM SUPPORTING SIDELINK, AND DEVICE THEREFOR**

VERFAHREN ZUR STEUERUNG DER ANSTEUERUNG EINES V2X-FAHRZEUGS DURCH EINE ERSTE VORRICHTUNG IN EINEM DRAHTLOSKOMMUNIKATIONSSYSTEM MIT SIDELINK-UNTERSTÜTZUNG UND VORRICHTUNG DAFÜR

PROCÉDÉ POUR COMMANDER LA CONDUITE D'UN VÉHICULE V2X PAR UN PREMIER DISPOSITIF DANS UN SYSTÈME DE COMMUNICATION SANS FIL SUPPORTANT LA LIAISON LATÉRALE, ET DISPOSITIF CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.11.2020 KR 20200146956**

(43) Date of publication of application:
**13.09.2023 Bulletin 2023/37**

(73) Proprietor: **LG Electronics Inc.
Yeongdeungpo-gu
Seoul, 07336 (KR)**

(72) Inventors:
• **HWANG, Jaeho**
  **Seoul 06772 (KR)**
• **KIM, Hakseong**
  **Seoul 06772 (KR)**
• **SEO, Hanbyul**
  **Seoul 06772 (KR)**

(74) Representative: **Plasseraud IP
104 Rue de Richelieu
CS92104
75080 Paris Cedex 02 (FR)**

(56) References cited:
JP-A- 2020 015 492   KR-A- 20180 000 910
KR-A- 20180 000 910   KR-A- 20190 103 093
KR-A- 20200 096 115   US-A1- 2020 094 827
US-A1- 2020 250 848   US-B1- 10 616 734

**(Cont. next page)**

(52) Cooperative Patent Classification (CPC): (Cont.)
 B60W 2556/65; B60W 2754/30; G08G 1/22

**Description**

[Technical Field]

Embodiments relates to a method and device for controlling driving of a vehicle-to-everything (V2X) vehicle based on the proportion of V2X vehicles calculated by a first device in a wireless communication system supporting sidelink.

[Background Art]

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

Document US 2020094827 discloses an autonomous-driving control method based on a V2X message transmitting a Sidelink Control Information (SCI) format.

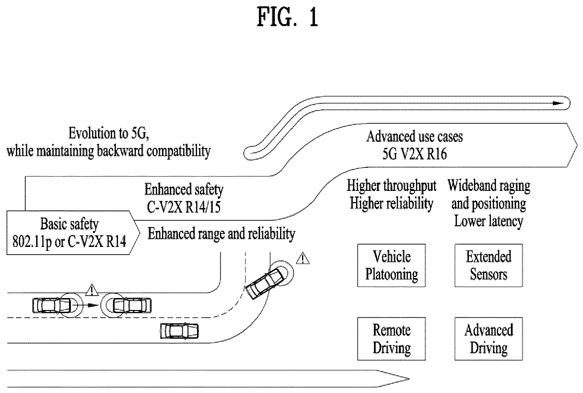

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

[Disclosure]

[Technical Problem]

An object of the present disclosure is to provide a method and device capable of efficiently providing a V2X service by configuring and determining control parameters related to autonomous driving based on a ratio of V2X vehicles and non-V2X vehicles.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

[Technical Solution]

In one aspect of the present disclosure, provided herein is a method for controlling driving of V2X vehicles by a first device in a wireless communication system supporting sidelink. The method may include sensing adjacent vehicles through a sensor, periodically receiving a V2X message from each of the V2X vehicles, and transmitting a first message containing information on a first ratio calculated based on the V2X message and a result of the sensing, wherein the first ratio may be calculated based on the number of the sensed adjacent vehicles and the number of V2X vehicles identified by the V2X message, wherein the first message may further contain information on a first time gap for controlling a distance between the V2X vehicles set based on the first ratio.

Alternatively, the number of the V2X vehicles may be calculated based on the V2X message containing location information corresponding to a preset area for a specific time, wherein the specific time may be determined based on the transmission periodicity of the V2X message.

Alternatively, the number of the V2X vehicles may correspond to the number of vehicles sensed to pass over a preset reference axis for a specific time based on the V2X message containing location information.

Alternatively, the first message may further contain a second time gap determined based on the first ratio, the second time gap being a basis for determining a braking distance related to emergency electronic brake light (EEBL).

Alternatively, the first message may contain information on a duration for which the first ratio is valid, the duration being set based on a rate of change of the first ratio.

Alternatively, the first device is a road side unit (RSU) fixed to a specific location or a SoftV2X server.

In another aspect of the present disclosure, provided herein is a method for controlling driving of V2X vehicles by a second device in a wireless communication system supporting sidelink. The method may include receiving a first message containing information on a first ratio, determining a first separation distance from a preceding vehicle based on the first ratio, and controlling driving of the V2X vehicles to maintain the first separation distance, wherein the first ratio may be a ratio of vehicles capable of V2X communication among vehicles located in a preset area.

Alternatively, the second device may set a braking distance related to emergency electronic brake light (EEBL) based on the first ratio.

Alternatively, the second device may set a separation distance from a preceding vehicle for accepting a lane change request from another V2X vehicle based on the first ratio.

Alternatively, the distance between the V2X vehicles may be a distance between V2X vehicles performing platooning.

In another aspect of the present disclosure, provided herein is a first device for controlling driving of V2X vehicles in a wireless communication system supporting sidelink. The first device may include a radio frequency (RF) transceiver, and a processor connected to the RF transceiver, wherein the processor may be configured to sense adjacent vehicles through a sensor, and control the RF transceiver to periodically receive a V2X message from each of the V2X vehicles, and transmit a first message containing information on a first ratio calculated based on the V2X message and a result of the sensing, wherein the first ratio may be calculated based on the number of the sensed adjacent vehicles and the number of V2X vehicles identified by the V2X message, wherein the first message may further contain information on a first time gap for controlling a distance between the V2X vehicles set based on the first ratio.

In another aspect of the present disclosure, provided herein is a second device for controlling driving of Vehicle-to-Everything (V2X) vehicles in a wireless communication system supporting sidelink. The second device may include a radio frequency (RF) transceiver, and a processor connected to the RF transceiver. The processor may be configured to control the RF transceiver to receive a first message containing information on a first ratio, determine a first separation distance from a preceding vehicle based on the first ratio, and control driving of the V2X vehicles to maintain the first separation distance. The first ratio may be a ratio of vehicles capable of V2X communication among vehicles located in a preset area.

In another aspect of the present disclosure, provided herein is a chipset for controlling driving of V2X vehicles in a wireless communication system supporting sidelink, the chipset may include at least one processor, and at least one memory operatively connected to the at least one processor and, when executed, causing the at least one processor to perform operations. The operations may include sensing adjacent vehicles through a sensor, periodically receiving a V2X message from each of the V2X vehicles, and transmitting a first message containing information on a first ratio calculated based on the V2X message and a result of the sensing. The first ratio may be calculated based on the number of the sensed adjacent vehicles and the number of V2X vehicles identified by the V2X message, wherein the first message may further contain information on a first time gap for controlling a distance between the V2X vehicles set based on the first ratio.

Alternatively, the processor may control a driving mode of the V2X devices related to the chipset based on the first ratio.

In another aspect of the present disclosure, provided herein is a computer-readable storage medium including at least one computer program for controlling driving of Vehicle-to-Everything (V2X) vehicles by at least one processor in a wireless communication system supporting sidelink. The storage medium may include at least one computer program configured to cause the at least one processor to perform an operation of controlling driving of the V2X vehicles, and a computer-readable storage medium storing the at least one computer program, wherein the operation may include sensing adjacent vehicles through a sensor, periodically receiving a V2X message from each of the V2X vehicles, and transmitting a first message containing information on a first ratio calculated based on the V2X message and a result of the sensing. The first ratio may be calculated based on the number of the sensed adjacent vehicles and the number of V2X vehicles identified by the V2X message, wherein the first message may further contain information on a first time gap for controlling a distance between the V2X vehicles set based on the first ratio.

[Advantageous Effects]

Various embodiments may efficiently provide a V2X service by configuring and determining control parameters related to autonomous driving based on a ratio of V2X vehicles and non-V2X vehicles.

Effects to be achieved by embodiment(s) are not limited to what has been particularly described hereinabove and other effects not mentioned herein will be more clearly understood by persons skilled in the art to which embodiment(s) pertain from the following detailed description.

[Description of Drawings]

The accompanying drawings, which are included to provide a further understanding of the disclosure and are incorporated in and constitute a part of this application, illustrate embodiments of the disclosure and together with the description serve to explain the principle of the disclosure.

FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a radio protocol architecture for SL communication.
FIG. 7 illustrates UEs performing V2X or SL communication.
FIG. 8 illustrates resource units for V2X or SL communication.
FIG. 9 is a diagram for explaining an ITS station reference architecture.
FIG. 10 illustrates an exemplary structure of an ITS station that may be designed and applied based on a reference architecture.
FIGS. 11 and 12 are diagrams illustrating a method of measuring or calculating a penetration ratio (PR).
FIGS. 13 and 14 are diagrams illustrating a detailed method of calculating a penetration ratio by an RSU.
FIG. 15 is a diagram illustrating a structure of an RSU message containing a penetration ratio, and FIGS. 16 and 17 are diagrams illustrating parameters PRLane and PRHistory contained in the RSU message.
FIGS. 18 to 20 are diagrams illustrating a method of controlling various V2X services by the RSU and/or a V2X vehicle based on the PR.

FIG. 21 is a flowchart illustrating a method of configuring parameters related to driving of a V2X vehicle by a first device based on a ratio of adjacent non-V2X vehicles.

FIG. 22 is a flowchart illustrating a method of configuring parameters related to driving of a V2X vehicle by a second device based on a ratio of adjacent non-V2X vehicles.

FIG. 23 illustrates a communication system applied to the present disclosure.

FIG. 24 illustrates wireless devices applicable to the present disclosure.

FIG. 25 illustrates another example of a wireless device to which the present disclosure is applied.

FIG. 26 illustrates a vehicle or an autonomous driving vehicle applied to the present disclosure.

[Best Mode]

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

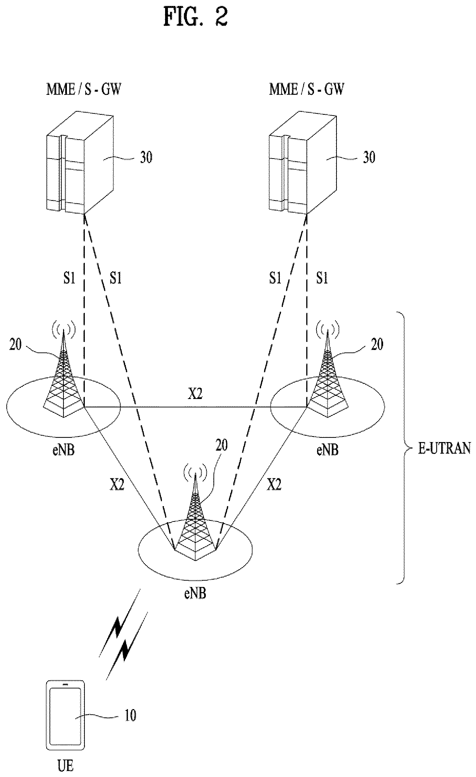

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

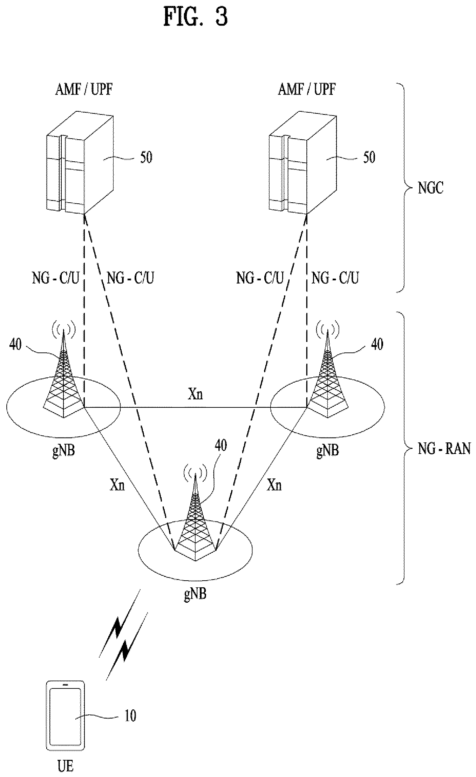

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and controlplane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

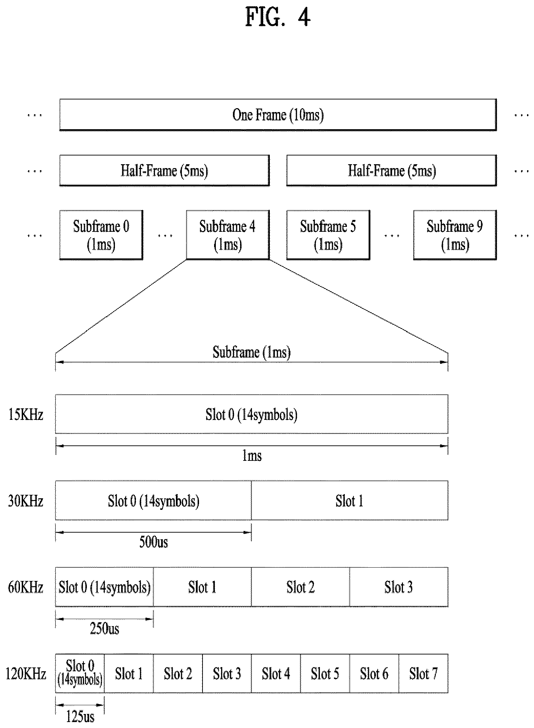

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms halfframes. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

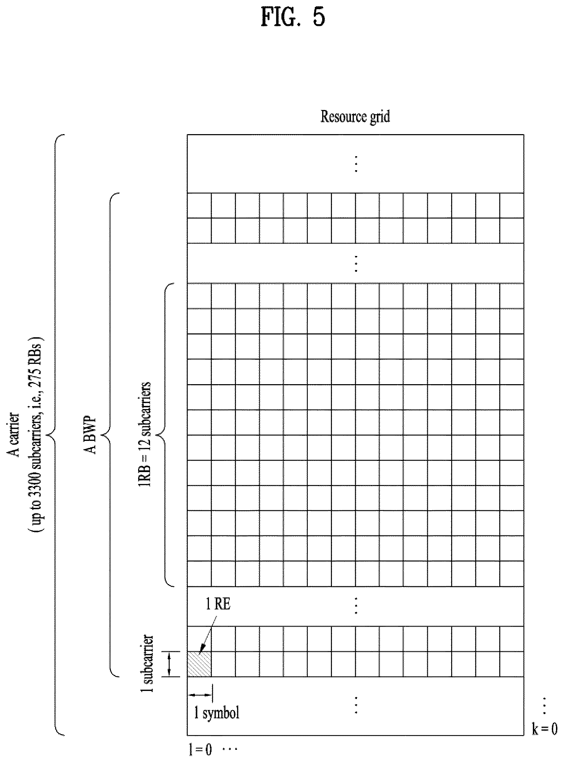

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

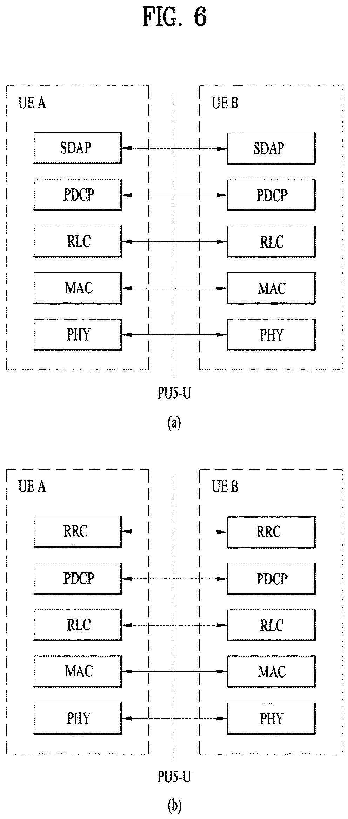

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

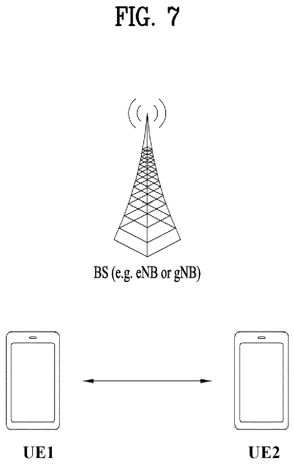

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

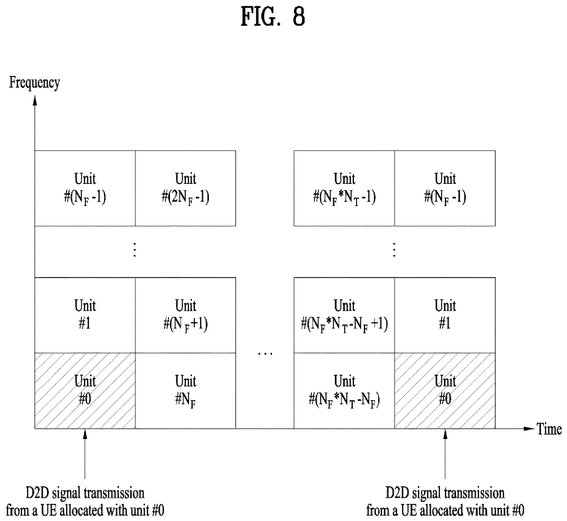

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

### Vehicular Communications for ITS

An intelligent transport system (ITS) utilizing vehicle-to-everything (V2X) may mainly include an access layer, a network & transport layer, a facilities layer, an application layer, security and management entities, etc. Vehicle communication may be applied to various scenarios such as vehicle-to-vehicle communication (V2V), vehicle-to-network communication (V2N or N2V), vehicle-to-road side unit (RSU) communication (V2I or I2V), RSU-to-RSU communication (I2I), vehicle-to-pedestrian communication (V2P or P2V), and RSU-to-pedestrian communication (I2P or P2I). A vehicle, a BS, an RSU, a pedestrian, etc. as the subjects of vehicle communication are referred to as ITS stations.

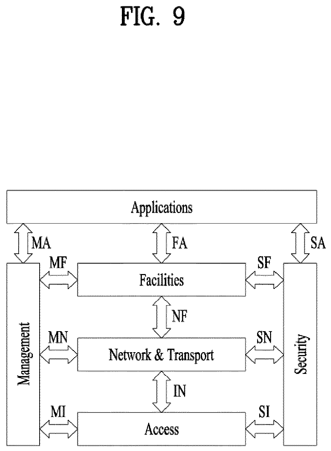

FIG. 9 is a diagram for explaining an ITS station reference architecture.

The ITS station reference architecture may include an access layer, a network & transport layer, a facilities layer, entities for security and management, and an application layer at the top. Basically, the ITS station reference architecture follows a layered OSI model.

Specifically, features of the ITS station reference architecture based on the OSI model are illustrated in FIG. 9. The access layer of the ITS station corresponds to OSI layer 1 (physical layer) and layer 2 (data link layer), the network & transport layer of the ITS station corresponds to OSI layer 3 (network layer) and layer 4 (transport layer), and the facilities layer of the ITS station corresponds to OSI layer 5 (session layer), layer 6 (presentation layer), and layer 7 (application layer).

The application layer, which is located at the highest layer of the ITS station, may actually implement and support a use-case and may be selectively used according to the use-case. The management entity serves to manage all layers in addition to managing communication and operations of the ITS station. The security entity provides security services for all layers. Each layer of the ITS station exchanges data transmitted or received through vehicle communication and additional information for various purposes through an interface. The abbreviations of various interfaces are described below.

MA: Interface between management entity and application layer
MF: Interface between management entity and facilities layer
MN: Interface between management entity and networking & transport layer
MI: Interface between management entity and access layer
FA: Interface between facilities layer and ITS-S applications
NF: Interface between networking & transport layer and facilities layer
IN: Interface between access layer and networking & transport layer
SA: Interface between security entity and ITS-S applications
SF: Interface between security entity and facilities layer
SN: Interface between security entity and networking & transport layer
SI: Interface between security entity and access layer

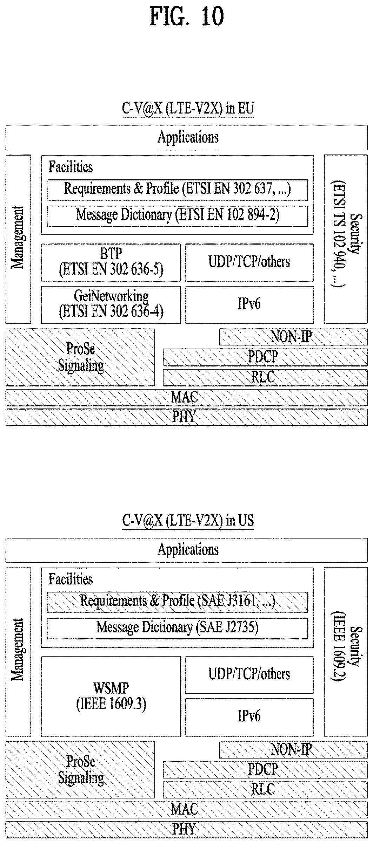

FIG. 10 illustrates an exemplary structure of an ITS station that may be designed and applied based on a reference architecture.

A main concept of the ITS station reference architecture is to allow each layer with a special function to process communication on a layer basis, between two end vehicles/users included in a communication network. That is, when a V2V message is generated, the data is passed through each layer downwards layer by layer in the vehicle and the ITS system (or other ITS-related UEs/systems), and a vehicle or ITS system (or other ITS-related UEs/systems) receiving the message passes the message upwards layer by layer.

The ITS system operating through vehicle communication and the network was organically designed in consideration of various access technologies, network protocols, communication interfaces, etc. to support various use-cases, and the roles and functions of each layer described below may be changed depending on a situation. The main functions of each layer will be briefly described.

The application later actually implements and supports various use-cases. For example, the application layer provides security, efficient traffic information, and other entertainment information.

The application layer controls an ITS station to which an application belongs in various manners or provides services by transferring a service message to an end vehicle/user/infrastructure through the access layer, the network & transport layer, and the facilities layer, which are lower layers of the application layer, by vehicle communication. In this case, the ITS application may support various use-cases. In general, these use-cases may be supported by grouping into other applications such as road-safety, traffic efficiency, local services, and infotainment. Application classification, use-cases, etc. may be updated when a new application scenario is defined. Layer management serves to manage and service information related to operation and security of the application layer, and the related information is transmitted and shared bidirectionally through an MA and an SA (or service access point (SAP), e.g. MA-SAP or SA-SAP). A request from the application layer to the facilities layer or a service message and related information from the facilities layer to the application layer may be delivered through an FA.

The facilities layer serves to support effective implementation of various use-cases defined in an application layer of a higher layer. For example, the facilities layer may perform application support, information support, and session/-communication support.

The facilities layer basically supports the 3 higher layers of the OSI model, for example, a session layer, a presentation layer, and the application layer, and functions. Specifically, the facilities layer provides facilities such as application support, information support, and session/communication support, for the ITS. Here, the facilities mean components that provide functionality, information, and data.

The application support facilities support the operation of ITS applications (mainly generation of a message for the ITS, transmission and reception of the message to and from a lower layer, and management of the message). The application support facilities include a cooperative awareness (CA) basic service and a decentralized environmental notification (DEN) basic service. In the future, facilities entities for new services such as cooperative adaptive cruise control (CACC), platooning, a vulnerable roadside user (VRU), and a collective perception service (CPS), and related messages may be additionally defined.

The information support facilities provide common data information or a database to be used by various ITS applications and includes a local dynamic map (LDM).

The session/communication support facilities provide services for communications and session management and include an addressing mode and session support.

Facilities may be divided into common facilities and domain facilities.

The common facilities are facilities that provide common services or functions required for various ITS applications and ITS station operations, such as time management, position management, and service management.

The domain facilities are facilities that provide special services or functions required only for some (one or more) ITS applications, such as a DEN basic service for road hazard warning applications (RHW). The domain facilities are optional functions and are not used unless supported by the ITS station.

Layer management serves to manage and service information related to the operation and security of the facilities layer, and the related information is transmitted and shared bidirectionally through an MF and an SF (or MF-SAP and SF-SAP). The transfer of service messages and related information from the application layer to the facilities layer or from the facilities layer to the application layer is performed through an FA (or FA-SAP), and bidirectional service messages and related information between the facilities layer and the lower networking & transport layer are transmitted by an NF (or NF-SAP).

The network & transport layer servers to configure a network for vehicle communication between homogenous or heterogeneous networks through support of various transport protocols and network protocols. For example, the network & transport layer may provide Internet access, routing, and vehicle networking using Internet protocols such as TCP/UDP+IPv6 and form a vehicle network using a basic transport protocol (BTP) and GeoNetworking-based protocols. In this case, networking using geographic position information may also be supported. A vehicle network layer may be designed or configured depending on technology used for the access layer (access layer technology-independently) or regardless of the technology used for the access layer (access layer technology-independently or access layer technology agnostically).

Functionalities of the European ITS network & transport layer are as follows. Basically, functionalities of the ITS network & transport layer are similar to or identical to those of OSI layer 3 (network layer) and layer 4 (transport layer) and have the following characteristics.

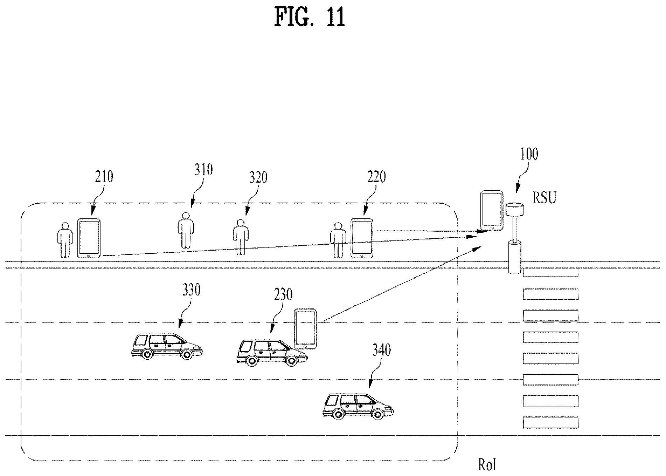

The transport layer is a connection layer that delivers service messages and related information received from higher layers (the session layer, the presentation layer, and the application layer) and lower layers (the network layer, the data link layer, and the physical layer). The transport layer serves to manage data transmitted by an application of the ITS station so that the data accurately arrives at an application process of the ITS station as a destination. Transport protocols that may be considered in European ITS include, for example, TCP and UDP used as legacy Internet protocols as illustrated in FIG.11, and there are transport protocols only for the ITS, such as the BTS.

The network layer serves to determine a logical address and a packet forwarding method/path, and add information such as the logical address of a destination and the forwarding path/method to a header of the network layer in a packet received from the transport layer. As an example of the packet method, unicast, broadcast, and multicast between ITS stations may be considered. Various networking protocols for the ITS may be considered, such as GeoNetworking, IPv6 networking with mobility support, and IPv6 over GeoNetworking. In addition to simple packet transmission, the GeoNetworking protocol may apply various forwarding paths or transmission ranges, such as forwarding using position information about stations including vehicles or forwarding using the number of forwarding hops.

Layer management related to the network & transport layer serves to manage and provide information related to the operation and security of the network & transport layer, and the related information is transmitted and shared bidirectionally through an MN (or MN-SAP) and an SN (or SN-SAP). Transmission of bidirectional service messages and related information between the facilities layer and the networking & transport layer is performed by an NF (or NF-SAP), and service messages and related information between the networking & transport layer and the access layer are exchanged by an IN (or IN-SAP).

A North American ITS network & transport layer supports IPv6 and TCP/UDP to support existing IP data like Europe, and a wave short message protocol (WSMP) is defined as a protocol only for the ITS.

A packet structure of a wave short message (WSM) generated according to the WSMP includes a WSMP header and WSM data carrying a message. The WSMP header includes Version, PSID, WSMP header extension fields, WSM WAVE element ID, and Length.

Version is defined by a WsmpVersion field indicating an actual WSMP version of 4 bits and a reserved field of 4 bits. PSID is a provider service identifier, which is allocated according to an application in a higher layer and helps a receiver to determine an appropriate higher layer. Extension fields is a field for extending the WSMP header, and includes information such as a channel number, a data rate, and transmit power used. WSMP WAVE element ID specifies the type of a WSM to be transmitted. Length specifies the length of transmitted WSM data in octets through a WSMLength field of 12 bits, and the remaining 4 bits are reserved. LLC Header allows IP data and WSMP data to be transmitted separately and is distinguished by Ethertype of a SNAP. The structures of the LLC header and the SNAP header are defined in IEEE802.2. When IP data is transmitted, Ethertype is set to 0x86DD in the LLC header. When WSMP is transmitted, Ethertype is set to 0x88DC in the LLC header. The receiver identifies Ethertype. If Ethertype is 0x86DD, the receiver transmits upward the packet to an IP data path, and if Ethertype is 0x88DC, the receiver transmits upward the packet to a WSMP path.

The access layer serves to transmit a message or data received from a higher layer on a physical channel. As access layer technologies, ITS-G5 vehicle communication technology based on IEEE 802.11p, satellite/broadband wireless mobile communication technology, 2G/3G/4G (long-term evolution (LTE), etc.)/5G wireless cellular communication technology, cellular-V2X vehicle-dedicated communication technologies such as LTE-V2X and NR-V2X (new radio), broadband terrestrial digital broadcasting technology such as DVB-T/T2/ATSC3.0, and GPS technology may be applied.

A data link layer is a layer that converts a physical line between adjacent nodes (or between vehicles) with noise into a communication channel without transmission error, for use in the higher network layer. The data link layer performs a function of transmitting/delivering/forwarding L3 protocols, a framing function of dividing data to be transmitted into packets (or frames) as transmission units and grouping the packets, a flow control function of compensating for a speed difference between a transmitter and a receiver, and a function of (because there is a high probability that an error and noise occurs randomly in view of the nature of a physical transmission medium) detecting a transmission error and correcting the error or detecting a transmission error based on a timer and an ACK signal by a transmitter in a method such as automatic repeat request (ACK) and retransmitting a packet that has not been correctly received. In addition, to avoid confusion between packets or ACK signals, the data link layer performs a function of assigning a sequence number to the packets and the ACK signals, and a function of controlling establishment, maintenance, and disconnection of a data link between network entities, and data transmission between network entities. The main functions of logical link control (LLC), radio resource control (RRC), packet data convergence protocol (PDCP), radio link control (RLC), medium access control (MAC), and multi-channel operation (MCO) included in the data link layer of FIG. 11 will be described below.

An LLC sub-layer enables the use of different lower MAC sub-layer protocols, and thus enables communication regardless of network topology. An RRC sub-layer performs functions such as broadcasting of cell system information required for all UEs within a cell, management of delivery of paging messages, management (setup/maintenance/release) of RRC connection between a UE and an E-UTRAN, mobility management (handover), transmission of UE context between eNodeBs during handover, UE measurement reporting and control therefor, UE capability management, temporary assignment of a cell ID to a UE, security management including key management, and RRC message encryption. A PDCP sub-layer may performs functions such as IP packet header compression in a compression method such as robust header compression (ROHC), cyphering of a control message and user data, data integrity, and data loss prevention during handover. RLC sub-layer delivers a packet received from the higher PDCP layer in an allowed size of the MAC layer through packet segmentation/concatenation, increases data transmission reliability by transmission error and retransmission management, checks the order of received data, reorders data, and checks redundancy. A MAC sub-layer performs functions such as control of the occurrence of collision/contention between nodes for use of shared media among multiple nodes, matching a packet delivered from the higher layer to a physical layer frame format, assignment and identification of the address of the transmitter/receiver, detection of a carrier, collision detection, and detection of obstacles on the physical medium. An MCO sub-layer enables efficient provision of various services on a plurality of frequency channels. The main function of MCO sub-layer is to effectively distribute traffic load of a specific frequency channel to other channels to minimize collision/contention of communication information between vehicles in each frequency channel.

The physical layer is the lowest layer in the ITS layer architecture. The physical layer defines an interface between a node and a transmission medium and performs modulation, coding, and mapping of a transport channel to a physical channel, for bit transmission between data link layer entities and informs the MAC sub-layer of whether a wireless medium is busy or idle by carrier sensing or clear channel assessment (CCA).

A SoftV2X system may be a system in which a SoftV2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the SoftV2X server through the UU interface, and may include mobility information about the VRU, such as a position, a movement direction, a movement path, and a speed of the VRU. That is, the SoftV2X system may use a method of receiving mobility information of VRUs and/or vehicles related to V2X communication through the UU interface and controlling a driving route or a VRU movement flow of the VRU, etc. based on the mobility information received by the softV2X server, such as a network. The SoftV2X system may be configured in relation to V2N communication.

User equipment or pedestrian equipment (VRU device) that is difficult to perform direct communication (PC5, DSRC) related to V2X communication can provide or receive driving information and mobility information to nearby vehicles or VRUs through the SoftV2X system based on the UU interface. Through this, the user equipment or pedestrian equipment (VRU device) that is difficult to perform the direct communication (PC5, DSRC) can be protected from surrounding vehicles.

## Penetration ratio calculation method and V2X operation

Safety between vehicles is ensured through information delivery between V2X vehicles. However, in reality, it is difficult to support perfect safety if vehicles are not 100% equipped with the V2X device because vehicles equipped with the V2X device and existing vehicles (non-equipped vehicles) coexist. In other words, when there are many V2X vehicles in the vicinity or when V2X vehicles and non-equipped vehicles coexist, a V2X vehicle needs to take a different action to perform an optimized operation, but the installation state of adjacent V2X vehicles is unknown. Accordingly, there is a need for a technology to measure the states.

Hereinafter, a method of calculating the ratio of V2X vehicles and non-V2X vehicles in a specific area and time zone using CCTV of an RSU (or an ADAS camera of a vehicle) will be described in detail. Also, a detailed description will be made regarding a method of adding information on the ratio to a conventional message and sharing the conventional message containing the ratio, and autonomous driving methods that may be considering when a V2X vehicle may identify the states of adjacent vehicles based on the information on the shared ratio and use the same for an autonomous driving algorithm later.

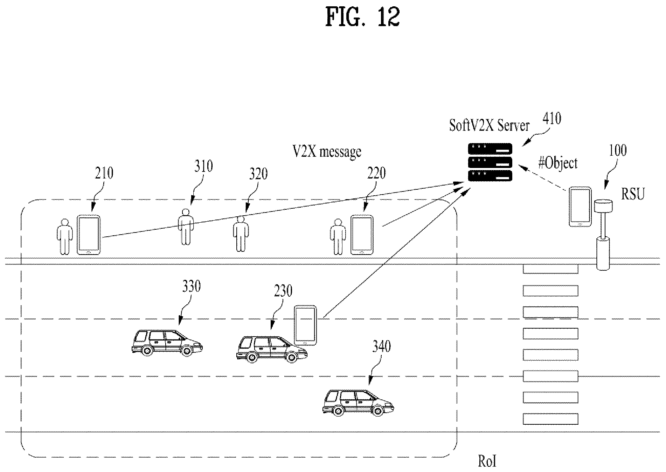

FIGS. 11 and 12 are diagrams illustrating a method of measuring or calculating a penetration ratio (PR).

Referring to FIG. 11, an RSU 100 may calculate a PR, which is an installation ratio of the V2X and/or a ratio of the V2X vehicles and non-V2X vehicles.

Specifically, the RSU 100 may recognize adjacent vehicles present in a region of interest (RoI) using its own camera. Thereafter, the RSU 100 determines the number of V2X vehicles received through the V2X device to determine the percentage of the V2X vehicles among all vehicles. Based on this method, the RSU 100 may calculate a penetration ratio, and may transmit or share the calculated penetration ratio to or with adjacent vehicles. In this case, the adjacent vehicles may recognize a situation of an adjacent road based on the PR and then perform an optimized V2X operation. In other words, the RSU may transmit the calculated PR to the adjacent V2X vehicles such that the adjacent V2X vehicles may perform an optimized V2X operation after recognizing a road situation.

Referring to FIG. 12, a SoftV2X server 410 may receive a VRU message and/or a V2X message from UEs or V2X vehicles 210, 220, and 230 over a network such as a conventional cellular network, like a Uu interface. In addition, the SoftV2X server 410 may receive RoI information about the target area and the number of objects measured in the target area (or a specific area) from the RSU 100. The SoftV2X server 410 may calculate the number of V2X devices having a communication module related to V2X in an area corresponding to the RoI information based on the VRU message and/or the V2X message. Thereafter, the SoftV2X server may compare the two pieces of information (the number of objects and the number of V2X devices) to calculate a PR. The SoftV2X server 410 may transmit the calculated PR to adjacent UEs or V2X vehicles. The adjacent UEs 210 and 220 or V2X vehicles 230 may perform operations and/or services related to the optimized V2X based on the PR.

In other words, the SoftV2X server 410 may receive reports of RoI information and the number of objects measured in the corresponding area from the RSU 100, and may receive a V2X message from a UE. The SoftV2X server 410 may calculate a PR based on the reported information and transmit the calculated PR to adjacent V2X vehicles.

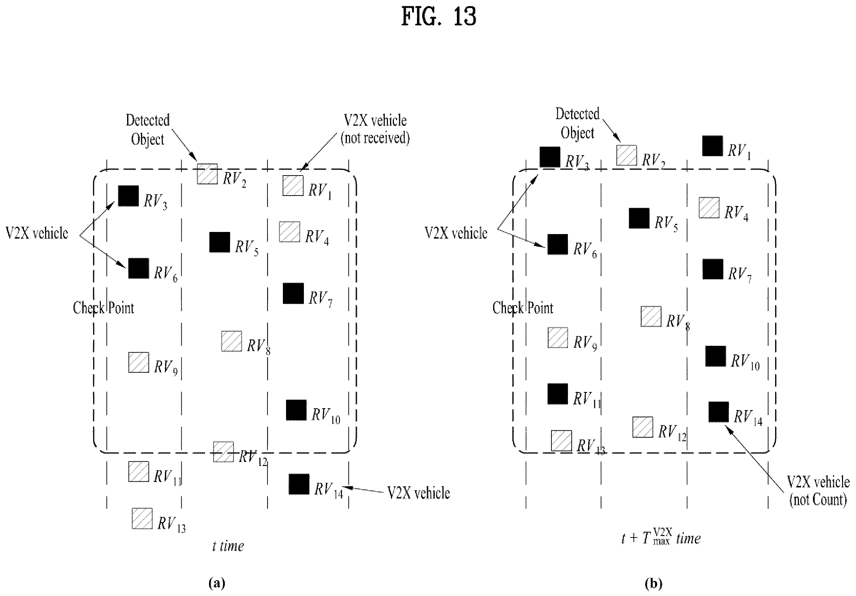

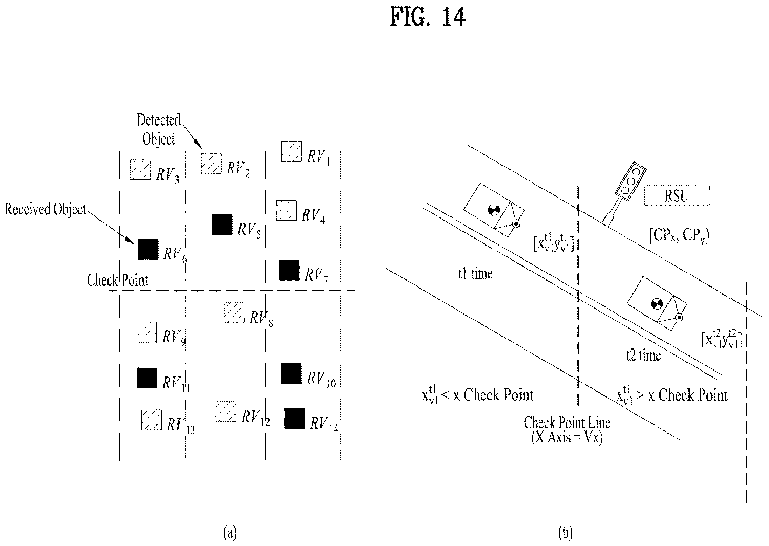

FIGS. 13 and 14 are diagrams illustrating a detailed method of calculating a PR by an RSU.

Referring to FIG. 13, the RSU (or SoftV2X server) calculates a PR of V2X devices in the target area corresponding to the RoI. For the calculations, the following two methods may be considered.

The first method is to measure the number of V2X vehicles located in a specific area RoI at a predetermined time. FIG. 13 schematically illustrates a specific method for area comparison. The SoftRSU or RSU may convert the target area RoI into an area of GPS coordinates. The RSU receives V2X data or a V2X message transmitted from a vehicle within a predetermined range (V2X reception area). When the V2X reception area and the target area do not coincide, the RSU may perform comparison or analysis to determine whether the location of the V2X device that has transmitted the V2X message is within the target area.

For example, referring to FIG. 13-(a), the RSU may calculate or measure the number of vehicles present in the target area RoI at a specific time as 12. The RSU may calculate the number of V2X vehicles located in the target area based on the V2X signal. Alternatively, the number of V2X vehicles may correspond to the vehicles present in the ROI in the V2X signal.

The V2X signal or the V2X message is periodically transmitted and not continuously transmitted. In this respect, in order to calculate the number of V2X vehicles, the RSU may receive a V2X message or V2X signal from the surroundings for a time corresponding to the maximum transmission period of the V2X message or the V2X signal. That is, as shown in FIG. 13-(b), the RSU continuously receives V2X messages for the maximum time $T_{max}^{V2X}$ of the V2X transmission period from t to measure the number of V2X devices. However, since the locaton chages for the time, it is necessary to re-measure the number of V2X vehicles using a specific calculation method.

Specifically, the RSU measures the number of vehicles entering the target area RoI based on V2X messages or signals received during the period from the initial t time (first time) to $t+T_{max}^{V2X}$ (second time) (or during the measurement time). When measured within the time, all numbers of V2X vehicles or V2X devices are measured. Because the number of V2X receptions (or V2X vehicles) at entry/exit has the same ratio in terms of probability, no error due to movement is generated. In other words, since the number of V2X vehicles entering the specific area during the measurement time is almost the same in probability as the number of exciting V2X vehicles, the number of V2X vehicles calculated by the RSU without considering the entry/exit during the measurement time may correspond to the actual number of V2X vehicles in the target area.

For example, referring to FIGS. 13-(a) and 13-(b), according to a transmission period, RV1 may not transmit the V2X message when located in the target area, but may transmit the V2X message after leaving the target area. In this case, the RSU recognizes RV1 as a non-equipped vehicle. In contrast, RV11 may be located outside the target area at the first time t, but may transmit the V2X message in the target area at the second time. In this case, the RSU may count RV11 as a V2X vehicle.

Referring to FIG. 14, the RSU may measure or calculate the proportion of V2X vehicles through real-time tracking (Second method). Specifically, the RSU may measure the proportion of V2X vehicles among the vehicles crossing a specific predetermined line. Here, the total number of vehicles may be obtained by counting vehicles crossing a specific area or the specific line (check point line) on the CCTV in real time. However, the V2X vehicle may transmit a signal periodically but discontinuously as in the previous case. In this respect, the method includes selecting a specific axis, selecting the line, and counting a vehicle as a V2X vehicle when two positions sent by the vehicle by a time difference has crossed the line. Alternatively, the RSU may receive periodically transmitted V2X messages, and may count a V2X vehicle when periodically receiving V2X messages by which a position change across the specific line may be detected. Accordingly, even in a situation in which discontinuous V2X messages are received, the RSU may predict an accurate number of V2X vehicles.

As shown in FIG. 14-(b), when the check point is designated on the x-axis, the number of V2X vehicles may be counted based on one axis by replacing the specific line with a specific x_checkpoint. In this case, the RSU may count a vehicle transmitting a V2X message as a V2X vehicle when a V2X message including location information in which information corresponding to the x-axis becomes greater than the x_checkpoint is periodically received.

Next, a structure of a message (RSU message) of the RSU containing the calculated penetration ratio will be described in detail.

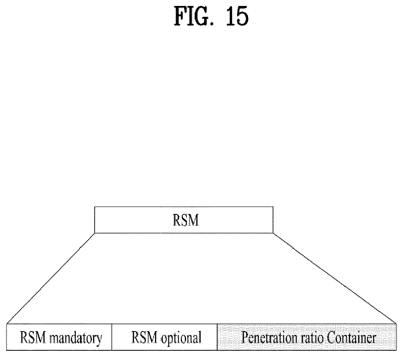

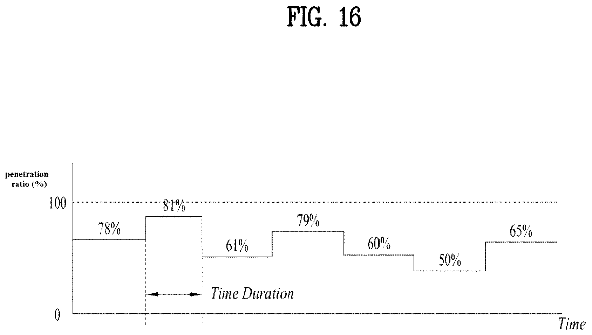

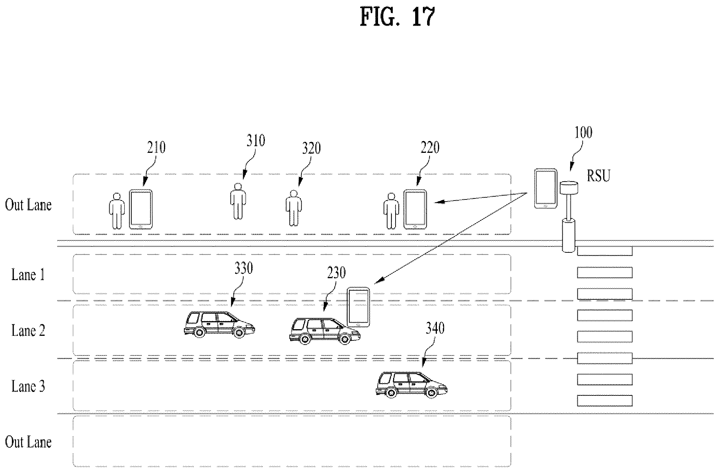

FIG. 15 is a diagram illustrating a structure of an RSU message containing a PR, and FIGS. 16 and 17 are diagrams illustrating parameters PRLane and PRHistory contained in the RSU message.

Referring to FIG. 15, an RSU (or SoftV2X server) may transmit an RSU message, in which a PR container containing a measured or calculated PR is newly defined. Here, the RSU message may be an RSU safety message or an infrastructure to vehicle message (IVM).

The PR container may be configured as shown in Table 5.

[Table 5]

| ASN. 1 Repr esent at i on | |
|---|---|
| DF_PR_cont ai ner | : : =SEQUENCE { |
| Type | I NTEGER |
| Time Duration | INTEGER - Minute |
| Total PRRatio | INTEGER - percent age |
| PRHistory | SEQUENCE of INTEGER - array of PRRatio |
| PRLane | SEQUENCE of INTEGER - array of PRRatio |
| } | |

Here, the type includes information on a method or type of measurement of a penetration ratio by the RSU. For example, the type may be set to 1 in the case where the PR is calculated based on the above-described target area, and may be set to 2 in the case where the PR is calculated based on a specific line. TimeDuration indicates a duration for which the value (or penetration ratio) is valid. The value (or TimeDuration) is increased if the penetration ratio measured by the RSU is less variable. If the penetration ratio is significantly variable, the value (or TimeDuration) is reduced such that the accuracy is increased when the value (or PR) is used at the receiving end (for example, it is set to a first value when the rate of change of the PR is less than a preset threshold, and is set to a second value when the rate of change of the PR is less than a preset threshold, wherein the first value is greater than the second value). In other words, the TimeDuration may be determined based on the rate of change of the PR calculated by the RSU.

TotalPR is data indicating the average of the penetration ratio (PR) and may be set in % (e.g., when TotalPR is set to 50, it may be seen that the average of PR is 50%). As an additional option, the PR container may further contain information on PR values predicted or calculated for each time zone or for each lane. Specifically, the PR container may further contain information on a sequence for PR values corresponding to PRHistory or PRLane.

Referring to FIG. 16, PRHistory represents a PR value for each time zone for the time duration TimeDuration. In this case, the first value of the Array is the current value (78%), and the past value is expressed through SEQUENCE of Integer at the interval of TimeDuration.

Referring to FIG. 17, PRlane may include information on PR values measured for each lane. Here, the initial value of the Array is indicated from north to south and from west to east. For example, the sidewalk part, which is the northern line, may be defined as the value of Array 1, and then Array values may be defined from the outer lane as 2, 3, and 4, and PR values corresponding to each array may be expressed in a sequence form.

As described above, the RSU may calculate and transmit a PR value that is the ratio information about the V2X vehicles using a mounted camera or the like. Hereinafter, a method of operating or controlling a V2X vehicle or an RSU based on the PR will be described in detail.

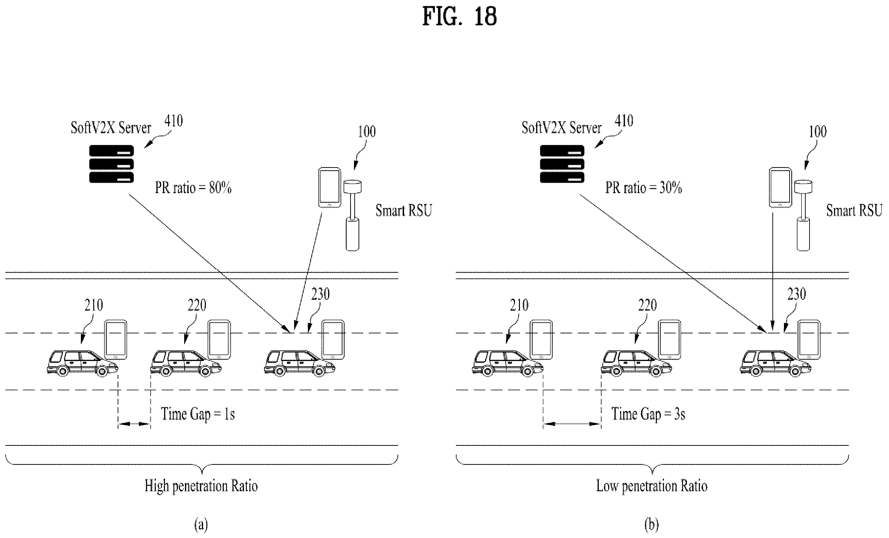

FIGS. 18 to 20 are diagrams illustrating a method of controlling various V2X services by the RSU and/or a V2X vehicle based on the PR.

The RSU and/or V2X vehicle may control vehicle driving related to a Platooning service, a vehicle control service through EEBL signal reception, and a Lane change Assist service based on the PR.

Referring to FIG. 18, the RSU and/or V2X vehicle may control the driving or operation of the vehicle in relation to the Platooning service.

Here, the Platooning service is a V2X-related service that enhancing operation efficiency and minimizes energy consumption by minimizing vehicle spacing after connecting V2X communication between V2X vehicles moving to the same destination. In performing the Platooning, a group is formed through inter-vehicle communication, and then the spacing between vehicles is minimized to slow down the vehicles in the Platoon Group at the same time when the speed of the preceding vehicle decreases.

The time gap of the platooning set in relation to the platooning service is a value or parameter related to a distance between vehicles, and may be determined based on a braking distance between the vehicles. In addition, the time gap may be set based on a state (error rate, latency performance, etc.) of the V2X device in the Platooning vehicle. In general, in the Platooning service, the time gap may be set to a value that may narrow the distance between vehicles as much as possible while securing a braking distance for the V2X vehicle, but is set without considering the adjacent road environment (e.g., the proportion of vehicles not equipped with V2X devices). In other words, in the conventional Platooning service, the time gap is set on the assumption that all vehicles have a V2X device. However, the time gap does not reflect a situation in which there are many vehicles not equipped with a V2X device.

For example, the time gap needs to be set in consideration of a situation in which braking is caused by a vehicle not equipped with a V2X device, or a situation in which a vehicle not equipped with a V2X device enters in the middle of platooning (a situation in which a brake is suddenly applied in front of the platooning or a situation of a cut in the platooning suddenly occurs without V2X communication in advance).

Specifically, the RSU (or SoftV2X server) may dynamically adjust the time gap of the platooning based on the measured or calculated PR. Alternatively, the PR or the time gap may be transmitted to a platooning leader, and the platooning leader may set or control at least one parameter for controlling the driving of the platooning based on the received PR or the time gap.

Referring to FIG. 18-(a), the RSU and/or the platooning leader may recognize that the ratio of adjacent non-V2X vehicles is low, based on a high PR (e.g., a PR greater than or equal to a preset threshold) and set the value of the time gap to be low. Alternatively, as shown in FIG. 18-(b), the RSU and/or platooning leader may recognize that the proportion of adjacent non-V2X vehicles is high, based on the lower PR (e.g., PR less than a preset threshold) and may set the time gap to a greater value.

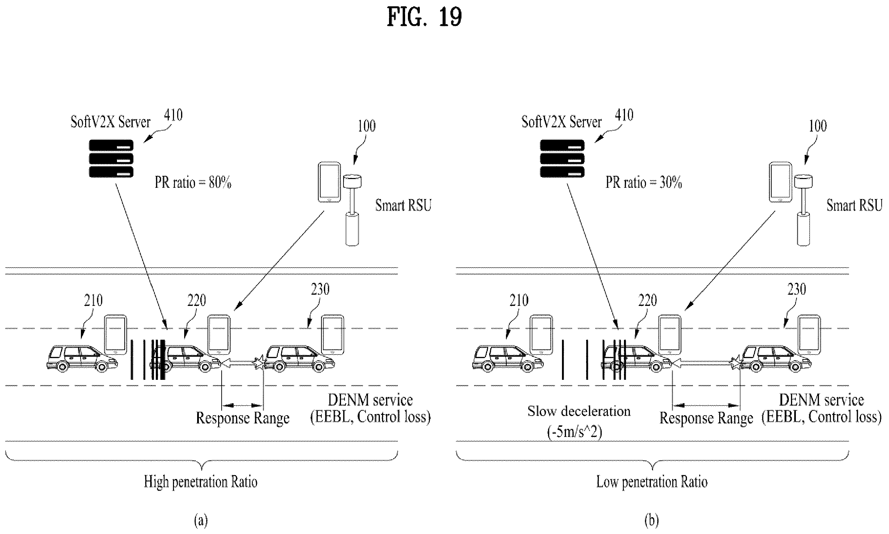

Referring to FIG. 19, the RSU and/or the platooning leader may control at least one parameter related to the safety service of the emergency electronic brake light (EEBL) based on the PR.

Specifically, when V2X vehicles apply a sudden brake or control loss, they may transmit information on the occurrence of emergency braking to a following vehicle. In this case, when the following vehicle receives the corresponding V2X signal, the vehicle reduces its own speed based on the EEBL. In this regard, in conventional cases, the speed will be reduced to a specific speed when the vehicle is located at a specific distance according to a preset situation of the vehicle, regardless of the vicinity situation (e.g., the proportion of adjacent non-V2X vehicles). In this case, since the V2X vehicle is decelerated without consideration of the non-V2X vehicles located among the V2X vehicles, collision with the non-V2X vehicles is likely to occur.

In consideration of this issue, the V2X vehicle or RSU (or SoftV2X server) may improve the performance of operation (e.g., autonomous driving) of the V2X vehicle by efficiently adjusting parameters set in response to the occurrence of the emergency braking, based on the calculated PR.

Referring to FIG. 19-(a), when the PR is high, there are many V2X vehicles adjacent, and thus that the possibility of occurrence of a secondary accident is reduced by receiving a DENM signal and responding the signal. In other words, a V2X vehicle having PR information may compare the distance to a specific event (control loss or sudden braking according to an emergency situation) and minimize the distance that the vehicle fails to reduce its own speed. In general, the situation caused by the sudden braking of the preceding vehicle is released to prevent a situation such as a shock wave. If the preceding vehicle controls loss, the vehicle will suddenly brake to prevent an accident. In this case, even when the preceding vehicle suddenly brakes, related information is transmitted to the adjacent vehicles by a V2X message such as DENM, and therefore the adjacent vehicles may respond quickly to the sudden braking situation (i.e., the proportion of V2X vehicles among the adjacent vehicles is high in the case of high PR), thereby reducing secondary accidents.

On the other hand, referring to FIG. 19-(b), when the proportion of V2X vehicles is low, the probability of secondary accidents increases because the following vehicles (or adjacent vehicles) cannot immediately recognize or identify a specific situation or event occurring among the preceding vehicles. In other words, in the case where a following vehicle 220 capable of recognizing or identifying a specific situation or event occurring in the preceding or foregoing vehicle through a V2X message suddenly brakes regardless of the PR as in the conventional method, the probability of a secondary accident with another following vehicle 230, a non-V2X vehicle, may increase.

Therefore, when the PR is low, the following vehicle 220 needs to set a long response section (or response range for the DENM) in response to the DENM in consideration of the possibility of the presence of the other following vehicle 230 that cannot detect the occurrence of an event due to the DENM from the preceding vehicle 210. In this case, the following vehicle 220 may provide the other following vehicle 230 with a sufficient braking opportunity by increasing the distance from the preceding vehicle 210 at which braking starts and reducing the deceleration rate, compared to the situation where the PR is high.

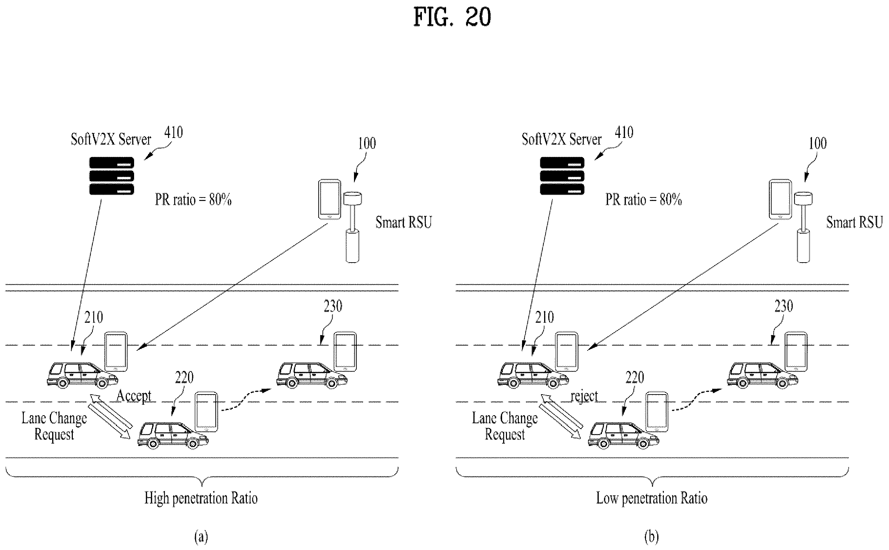

Next, referring to FIG. 20, the V2X vehicle or the RSU may control or adjust at least one parameter related to the lane change service based on the PR.

Specifically, in the case of a conventional lane change assistant (LCA) service, when the V2X vehicle receives a lane change request, it may transmit a response message for accepting or rejecting the lane change request based on the space required for lane change and the situation thereof. However, in determining whether to accept the lane change request, the V2X vehicle needs to be operated with a maximum margin because it considers only its own situation. In contrast, the V2X vehicle may recognize the situation of adjacent V2X vehicles based on the PR value received from the RSU (or SoftV2X server), and may efficiently operate the lane change service based thereon.

As shown in FIG. 20-(a), in the case where the PR is high (i.e., many V2X vehicles are present in the vicinity), a first V2X vehicle 210 may reduce a distance between the first V2X vehicle 210 and a third V2X vehicle 230 for accepting the lane change request. In contrast, in the case where the PR is low as illustrated in FIG. 20-(b), there is a possibility of collision with an adjacent non-V2X vehicle due to lane change of the second V2X vehicle 220, and thus the first V2X vehicle 210 may increase the distance between the first V2X vehicle 210 and the third V2X vehicle 230 for accepting the lane change request.

As described above, in order to address the issue of coexistence with non-V2X vehicles in the V2X service, the V2X vehicle, the RSU, and/or the SoftV2X server may calculate and transmit a PR and control driving of the V2X vehicle based on the PR. Accordingly, the V2X PR described above may be reflected in the algorithm of the provided V2X service regardless of the V2X operation environment, thereby providing an optimal control environment for the V2X vehicle in relation to non-V2X.

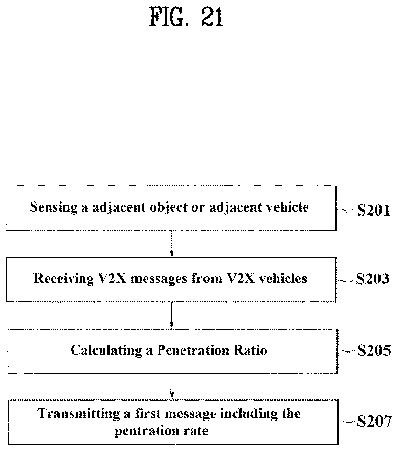

FIG. 21 is a flowchart illustrating a method of configuring parameters related to driving of a V2X vehicle by a first device based on a ratio of adjacent non-V2X vehicles.

Referring to FIG. 21, a first device may sense adjacent vehicles through a camera or a sensor such as LiDAR (S201). The first device may count the number of adjacent vehicles or adjacent objects located in a specific area through the sensor based on a preset area (or a specific area), a preset reference point, and/or a preset coordinate value. Here, the first device may count the number of adjacent vehicles (or the number of vehicles in the specific area) with a periodicity of a specific time. Here, the first device may be a road side unit (RSU) fixed to a structure near a road or a SoftV2X server.

Next, the first device may periodically receive a V2X message or a SoftV2X message from adjacent vehicles (S203). For example, the adjacent vehicles may periodically transmit a V2X message and/or a SoftV2X message containing location information or the like related thereto based on an interface related to V2X or SoftV2X. In this case, the first device may identify adjacent vehicles having location information related to a specific area based on the V2X message and/or the SoftV2X message.

Specifically, the first device may determine the V2X message and/or SoftV2X message having location information corresponding to a preset area (or the specific area) and count the number of V2X vehicles located in the specific area (or the number of V2X vehicles in the specific area) based on the determined V2X message and/or SoftV2X message. For example, when the location information contained in the V2X message and/or SoftV2X message is included in the preset area, the first device may count the number of V2X vehicles that have transmitted the V2X message and/or SoftV2X message.

Alternatively, the first device may count the number of V2X vehicles located in the percent area with a periodicity of a specific time (or specific period). For example, the first device may count the number of V2X vehicles located in the preset area during a specific period, and may set or determine the counted number as the number of V2X vehicles in the preset area. Here, the specific period may be determined based on a transmission period of the V2X message and/or the SoftV2X message of the adjacent V2X vehicles. For example, the longest transmission period among the transmission periods of the adjacent V2X vehicles may be determined as the specific period. Alternatively, the first device may determine the specific period based on the CR and/or CBR measured by the adjacent V2X vehicles. For example, when the CR and/or CBR are greater than or equal to a preset threshold, the first device may increase the specific period. When the CR and/or CBR are less than the preset threshold, the device may reduce the specific period.

Alternatively, the first device may count the number of V2X vehicles in a specific area from the V2X message and/or the SoftV2X message based on a preset reference line as described above. Specifically, the first device may determine whether location information acquired from periodically received V2X messages and/or SoftV2X messages has passed over the preset reference line, and may calculate or determine the number of V2X vehicles based on the V2X message and/or SoftV2X message containing the location information having passed over the preset reference line. For example, the first device may receive a first V2X message and a second V2X message periodically transmitted from the first V2X vehicle, and may count the first V2X vehicle as a V2X vehicle in the specific area when it is determined that the first V2X vehicle has passed over the preset reference line based on location information contained in each of the first V2X message and the second V2X message.

Alternatively, the first device may count the number of V2X vehicles based on a preset coordinate value (or the preset reference line being parallel to the x-axis or y-axis). When the preset coordinate value is a coordinate value on the x-axis (latitude or longitude axis), the first device may since whether the sign of the difference from the preset coordinate value changes based on the periodically received V2X message and/or SoftV2X message. For example, when a first coordinate value and a second coordinate value are periodically acquired based on the V2X message and/or SoftV2X message, the first device may count a V2X vehicle that has transmitted the V2X message and/or SoftV2X message as a V2X vehicle in the specific area when the sign of the difference from the first coordinate value (i.e., the preset coordinate value-the first coordinate value) is different from the sign of the difference from the second coordinate value (the preset coordinate value-the second coordinate value).

Next, the first device may calculate a penetration ratio based on the number of vehicles in the specific area and the number of V2X vehicles in the specific area (S205). As described above, the penetration ratio is information on a proportion of V2X vehicles or a proportion of non-V2X vehicles in a preset area or the specific area. Alternatively, the penetration ratio may be calculated for each specific period, and information on a valid time of the penetration ratio may be determined based on the specific time.

Alternatively, the valid time may be determined or set based on a rate of change of the penetration ratio (hereinafter, PR) for each specific time. For example, when the rate of change of PR for each specific time is less than a first threshold rate of change, the first device may set the valid time greater than the specific time. Alternatively, when the parade of change of the PR for each specific time is greater than or equal to the first threshold rate of change, the first device may set the valid time shorter than the specific time.

Next, the first device may transmit a first message containing information on the PR (S207). The first message may be a V2X message based on V2X communication, an RSU message transmitted by an RSU, or a SoftV2X message transmitted through a Uu interface based on SoftV2X.

Alternatively, the first device may transmit the first message further containing control information (or a control parameter) related to control of driving of the V2X vehicles determined based on the PR. Specifically, the first device may determine, based on the PR, at least one of a first time gap related to a minimum separation distance between vehicles related to platooning, a second time gap related to braking related to emergency electronic brake light (EEBL), or a third time gap related to a distance to a preceding vehicle for accepting a lane change request, and may transmit the first message containing information on the first time gap, the second time gap, and/or the third time gap. In this case, the first device may configure a control parameter related to driving of adjacent V2X vehicles through the first message containing the information on the first time gap, the second time gap, and/or the third time gap.

For example, the first device may determine the first time gap or the first distance based on the PR and transmit a first message containing information on the first time gap or the first distance. Upon receiving the information on the first time gap or the first distance, the V2X vehicle may determine a minimum separation distance from the preceding vehicle for platooning based on the first time gap and the first distance. For example, when the PR is high (PR is the greater than or equal to a first threshold), the first time gap or the first distance may be set to be less than a reference value, and the V2X vehicle may set or determine a shorter distance as the minimum separation distance based on the first time gap or the first distance. Alternatively, when the PR is low (the PR is less than the first threshold), the first time gap or the first distance may be set to a value greater than the reference value, and the V2X vehicle may set or determine a longer distance as the minimum separation distance based on the first time gap or the first distance.

Alternatively, the first device may determine the second time gap or the second distance based on the PR and transmit the first message containing information on the second time gap or the second distance. The V2X vehicle receiving the information on the second time gap or the second distance may determine or set a braking distance or braking acceleration in reseponse to reception of an emergency message (DENM, etc.) related to emergency braking from the preceding vehicle based on the second time gap or the second distance. For example, when the PR is high (the PR is greater than or equal to the first threshold), the second time gap may be set to a value less than the reference value, and the V2X vehicle may set a shorter braking distance or increase the magnitude of the braking acceleration based on the second time gap. Alternatively, when the PR is low (the PR is less than the first threshold), the second time gap may be set to a value greater than the reference value, and the V2X vehicle may set a longer braking distance or reduce the magnitude of the braking acceleration based on the second time gap.

Alternatively, the first device may determine the third time gap or the third distance based on the PR, and transmit the first message including information on the third time gap or the third distance. Upon receiving the information on the third time gap or the third distance, the V2X vehicle may determine or set a minimum separation distance from the preceding vehicle for a or allowing a lane change request from an adjacent V2X vehicle based on the third time gap or the third distance. For example, when the PR is high (the PR is greater than or equal to the first threshold), the third time gap may be set to a value less than a reference value, and the V2X vehicle may set or determine the minimum separation distance shorter based on the third time gap. Alternatively, when the PR is low (the PR is less than the first threshold value), the third time gap may be set to a value greater than the reference value, and the V2X vehicle may increase the minimum separation distance based on the third time gap.

As described above, the first device may additionally consider a relationship with non-V2X vehicles based on the PR, which is a proportion of V2X vehicles (or a proportion of non-V2X) in a specific area, thereby efficiently controlling driving of the V2X vehicles in the specific area.

FIG. 21 is a flowchart illustrating a method of configuring parameters related to driving of a V2X vehicle by a first device based on a ratio of adjacent non-V2X vehicles.

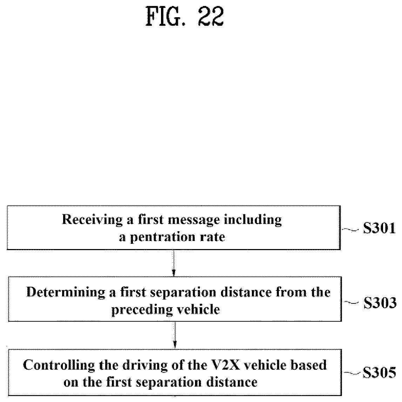

Referring to FIG. 22, a second device may receive a first message containing information on the PR from the first device (S301). As described above, the PR may be a ratio calculated based on the number of vehicles in a specific area and the number of V2X vehicles in the specific area. In other words, the PR is information on the proportion of V2X vehicles or a proportion of non-V2X vehicles in a preset area or th specific area. Alternatively, the PR may be calculated for each specific time.

Alternatively, the first message may contain information on an valid time when the PR value is valid. For example, the valid time may be a specific period from the time of reception or information on a specific expiration time. Alternatively, the valid time may be determined based on a rate of change of the PR for each specific time. For example, when the rate of change of the PR for each specific time is less than a first threshold rate of change, the valid time may be set longer than the specific time. Alternatively, when the rate of change of the PR for each specific time is greater than or equal to the first threshold rate of change, the valid time may be set shorter than the specific time.

Next, the second device may determine a first separation distance from a preceding vehicle based on the PR (S303). The second device may be a platooning leader or a platooning member in a platooning, and may determine a first separation distance, which is a minimum separation distance from a preceding vehicle in relation to the platooning, based on the PR. The second device may control the driving of the V2X vehicles related to the second device such that the distance from the preceding vehicle is maintained as the determined first separation distance.

Alternatively, the second device may determine or set the size of the platooning based on the PR. For example, when the PR is high, the second device may increase the number of vehicles participating in the platooning (or increase the size of the platooning). Alternatively, the second device may change or determine the driving position of the platooning leader included in the platooning based on the PR. When the PR is lower than a specific threshold, the second device may set the driving position of the platooning leader such that the driving position of the platooning leader is in the middle of the platooning vehicles.

Alternatively, the second device may set or determine a braking distance or braking acceleration related to emergency electronic brake light (EEBL) based on the PR. Alternatively, the second device may determine the second time gap based on the PR, and may set or determine a braking distance or braking acceleration related to the EEBL based on the second time gap. For example, the second device may control the driving of the V2X vehicles to have the braking distance or braking acceleration determined based on the PR when performing an EEBL operation according to the reception of an emergency message (DENM, etc.) related to emergency braking from the preceding vehicle. For example, when the PR is high (the PR is greater than or equal to the first threshold), the second time gap may be set to a value less than a reference value, and the second device may set the braking distance shorter or increase the magnitude of the braking acceleration based on the second time gap. Alternatively, when the PR is low (when the PR is less than the first threshold), the second time gap may be set to a value greater than the reference value, and the second device may set the braking distance longer or reduce the magnitude of the braking acceleration based on the second time gap.

Alternatively, the second device may determine or set a minimum separation distance from the preceding vehicle for allowing a lane change request from another V2X vehicle based on the PR. Alternatively, the second device may determine the third time gap based on the PR and determine or set a minimum separation distance from the preceding vehicle for accepting or allowing a lane change request from an adjacent V2X vehicle based on the third time gap.

For example, when the PR is high (the PR is greater than or equal to the first threshold), the third time gap may be set to a value less than a reference value, and the second device may set or determine to reduce the minimum separation distance based on the third time gap. Alternatively, when the PR is low (the PR is less than the first threshold value), the third time gap may be set to a value greater than the reference value, and the second device may increase the minimum separation distance based on the third time gap.

Next, the second device may control driving of the V2X vehicles based on the first time gap, the second time gap, and/or the third time gap determined based on the PR (S305). Alternatively, when the second device is the leader of the platooning, the second device may transmit the second message containing the information on the first time gap, the second time gap, and/or the third time gap to the platooning members to control driving of the platooning members.

As described above, the second device may additionally consider a relationship with non-V2X vehicles based on the PR, which is a proportion of the V2X vehicles (or a proportion of the non-V2X vehicles) in a specific area, thereby efficiently controlling driving of the V2X vehicle in the specific area.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

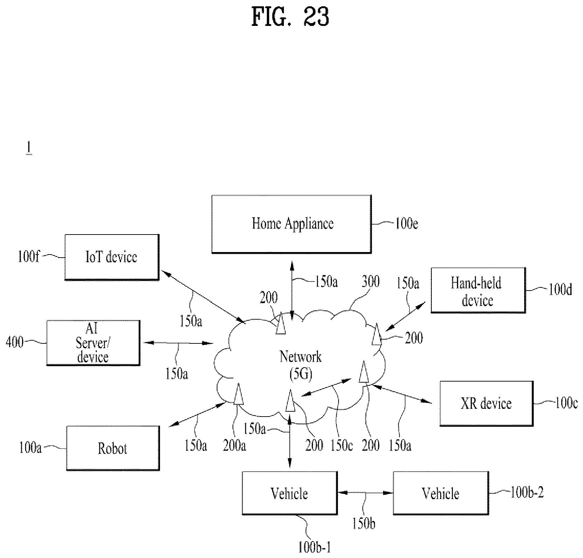

FIG. 23 illustrates a communication system applied to the present disclosure.

Referring to FIG. 23, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

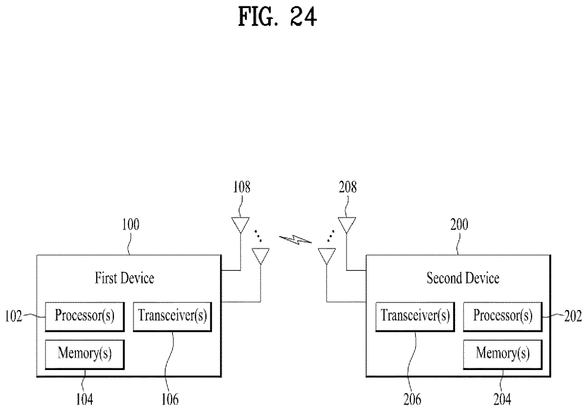

FIG. 24 illustrates a wireless device applicable to the present disclosure.

Referring to FIG. 24, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first device or first wireless device 100 may include the RF transceiver (or the transceiver), the processor 102, the memory 104, and/or the sensor. The memory 104 may include at least one program capable of performing operations related to the embodiments described with reference to FIGS. 11 to 22.

The processor 102 may sense adjacent vehicles through the sensor, control the RF transceiver to periodically receive a V2X message from each of the V2X vehicles and transmit a first message containing information on a first ratio calculated based on the V2X message and a result of the sensing, and determine a plurality of second VRU paths located between two joints based on the determined joints. The first message may further contain information on a first time gap for controlling a distance between the V2X vehicles set based on the first ratio. The processor 102 may perform driving control of the V2X vehicles based on the first ratio described with reference to FIGS. 11 to 22 based on a program included in the memory 104.

Alternatively, a chipset including the processor 102 and the memory 104 may be configured. In this case, the chipset may include at least one processor and at least one memory operatively connected to the at least one processor and, when executed, causing the at least one processor to perform operations.

The at least one processor included in the chipset may sense adjacent vehicles through a sensor, periodically receive a V2X message from each of V2X vehicles, transmit a first message containing information on a first ratio calculated based on the V2X message and a result of the sensing. The first ratio may be calculated based on the number of the sensed adjacent vehicles and the number of V2X vehicles identified by the V2X message. The first message may further contain information on a first time gap for controlling a distance between the V2X vehicles set based on the first ratio.

Alternatively, a computer-readable storage medium including at least one computer program configured to cause the at least one processor to perform an operation is provided. The operation may include sensing adjacent vehicles through a sensor, periodically receiving a V2X message from each of the V2X vehicles, and transmitting a first message containing information on a first ratio calculated based on the V2X message and a result of the sensing. The first message may further contain information on a first time gap for controlling a distance between the V2X vehicles set based on the first ratio. In addition, the computer program may include programs for performing driving control of the V2X vehicles based on the first ratio described with reference to FIGS. 11 to 22.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second device or second wireless device 200 may include the RF transceiver (or the transceiver), the processor 202, and the memory 204. The memory 204 may include at least one program capable of performing operations related to the embodiments described with reference to FIGS. 11 to 22.

The processor 102 may control the RF transceiver to receive a first message containing information on a first ratio, determine a first separation distance from a preceding vehicle based on the first ratio, and control driving of the V2X vehicles to maintain the first separation distance. The first ratio may be a ratio of vehicles capable of V2X communication among vehicles located in a preset area. In addition, the processor 102 may perform driving control of the V2X vehicles based on the first ratio described with reference to FIGS. 11 to 22.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of wireless devices to which the present disclosure is applied

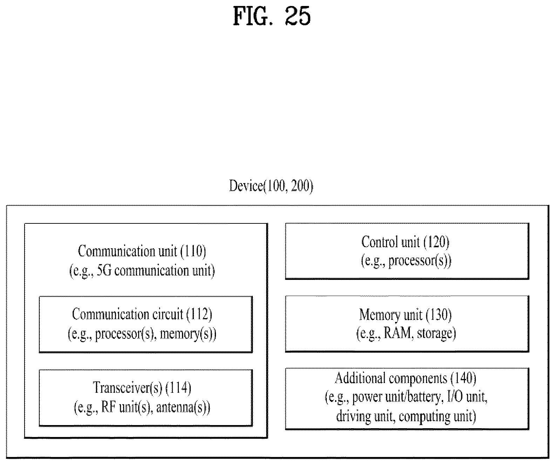

FIG. 25 illustrates another example of a wireless device applied to the present disclosure. The wireless device may be implemented in various forms according to a use-case/service (refer to FIG. 23)

Referring to FIG. 25, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 24. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast terminal, a hologram device, a public safety device, an MTC device, a medicine device, a fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

## Examples of vehicles or autonomous vehicles to which the present disclosure is applied

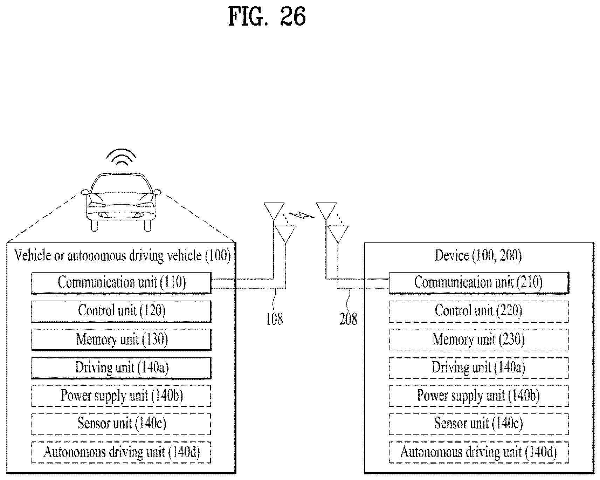

FIG. 26 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 26, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network including a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims, not by the above description, and all changes coming within the meaning and equivalency range of the appended claims are intended to be embraced therein.

[Industrial Applicability]

The above-described embodiments of the present disclosure are applicable to various.

**Claims**

1.    A method for controlling driving of Vehicle-to-Everything, V2X, vehicles by a first device in a wireless communication system supporting sidelink, the method comprising:

sensing adjacent vehicles through a sensor;

periodically receiving a V2X message from each of the V2X vehicles; and

transmitting a first message containing information on a first ratio calculated based on the V2X message and a result of the sensing,

wherein the first ratio is calculated based on the number of the sensed adjacent vehicles and the number of V2X vehicles identified by the V2X message,

wherein the first message further contains information on a first time gap for controlling a distance between the V2X vehicles set based on the first ratio.

2. The method of claim 1, wherein the number of the V2X vehicles is calculated based on the V2X message containing location information corresponding to a preset area for a specific time,
wherein the specific time is determined based on the transmission periodicity of the V2X message.

3. The method of claim 1, wherein the number of the V2X vehicles corresponds to the number of vehicles sensed to pass over a preset reference axis for a specific time based on the V2X message containing location information.

4. The method of claim 1, wherein the first message further contains a second time gap determined based on the first ratio, the second time gap being a basis for determining a braking distance related to emergency electronic brake light, EEBL.

5. The method of claim 1, wherein the first message further contains information on a third time gap determined based on the first ratio, the third time gap being a basis for determining a distance related to acceptance of a lane change request between the V2X vehicles.

6. The method of claim 1, wherein the distance between the V2X vehicles is a distance between V2X vehicles performing platooning.

7. The method of claim 1, wherein the first message contains information on a duration for which the first ratio is valid, the duration being set based on a rate of change of the first ratio.

8. The method of claim 1, wherein the first device is a road side unit (RSU) fixed to a specific location or a SoftV2X server.

9. A method for controlling driving of Vehicle-to-Everything, V2X, vehicles by a second device in a wireless communication system supporting sidelink, the method comprising:

receiving a first message containing information on a first ratio;
determining a first separation distance from a preceding vehicle based on the first ratio; and
controlling driving of the V2X vehicles to maintain the first separation distance,
wherein the first ratio is calculated based on the number of the sensed adjacent vehicles and the number of V2X vehicles identified by a V2X message.

10. The method of claim 9, wherein the second device sets a braking distance related to emergency electronic brake light, EEBL, based on the first ratio.

11. The method of claim 9, wherein the second device sets a separation distance from a preceding vehicle for accepting a lane change request from another V2X vehicle based on the first ratio.

12. A first device for controlling driving of Vehicle-to-Everything, V2X, vehicles in a wireless communication system supporting sidelink, the first device comprising:

a radio frequency, RF, transceiver; and
a processor connected to the RF transceiver;
wherein the processor is configured to:

sense adjacent vehicles through a sensor; and
control the RF transceiver to:

periodically receive a V2X message from each of the V2X vehicles; and
transmit a first message containing information on a first ratio calculated based on the V2X message and a result of the sensing,

wherein the first ratio is calculated based on the number of the sensed adjacent vehicles and the number of V2X vehicles identified by the V2X message,

wherein the first message further contains information on a first time gap for controlling a distance between the V2X vehicles set based on the first ratio.

13. A second device for controlling driving of Vehicle-to-Everything, V2X, vehicles in a wireless communication system supporting sidelink, the second device comprising:

a radio frequency, RF, transceiver; and
a processor connected to the RF transceiver,
wherein the processor is configured to:

control the RF transceiver to receive a first message containing information on a first ratio;
determine a first separation distance from a preceding vehicle based on the first ratio; and
control driving of the V2X vehicles to maintain the first separation distance,
wherein the first ratio is calculated based on the number of the sensed adjacent vehicles and the number of V2X vehicles identified by a V2X message

14. A computer-readable storage medium including at least one computer program for controlling driving of Vehicle-to-Everything (V2X) vehicles by at least one processor in a wireless communication system supporting sidelink, the storage medium comprising:

at least one computer program configured to cause the at least one processor to perform an operation of controlling driving of the V2X vehicles; and
a computer-readable storage medium storing the at least one computer program,
wherein the operation comprises:

sensing adjacent vehicles through a sensor;
periodically receiving a V2X message from each of the V2X vehicles; and
transmitting a first message containing information on a first ratio calculated based on the V2X message and a result of the sensing,
wherein the first ratio is calculated based on the number of the sensed adjacent vehicles and the number of V2X vehicles identified by the V2X message,
wherein the first message further contains information on a first time gap for controlling a distance between the V2X vehicles set based on the first ratio.

**Patentansprüche**

1. Verfahren zum Steuern des Fahrens von Vehicle-to-Everything, V2X,-Fahrzeugen durch eine erste Vorrichtung in einem drahtlosen Kommunikationssystem, das Sidelink unterstützt, wobei das Verfahren Folgendes umfasst:

Erfassen benachbarter Fahrzeuge durch einen Sensor;
periodisches Empfangen einer V2X-Nachricht von jedem der V2X-Fahrzeuge; und
Senden einer ersten Nachricht, die Informationen über ein erstes Verhältnis enthält, das basierend auf der V2X-Nachricht und einem Ergebnis der Erfassung berechnet wurde,
wobei das erste Verhältnis basierend auf der Anzahl der erfassten benachbarten Fahrzeuge und der Anzahl der durch die V2X-Nachricht identifizierten V2X-Fahrzeuge berechnet wird,
wobei die erste Nachricht ferner Informationen über eine erste Zeitlücke zum Steuern eines basierend auf dem ersten Verhältnis festgelegten Abstands zwischen den V2X-Fahrzeugen enthält.

2. Verfahren nach Anspruch 1, wobei die Anzahl der V2X-Fahrzeuge basierend auf der V2X-Nachricht berechnet wird, die Standortinformationen enthält, die einem voreingestellten Gebiet für eine bestimmte Zeit entsprechen,
wobei die spezifische Zeit basierend auf der Sendeperiodizität der V2X-Nachricht bestimmt wird.

3. Verfahren nach Anspruch 1, wobei die Anzahl der V2X-Fahrzeuge der Anzahl der Fahrzeuge entspricht, die basierend auf der V2X-Nachricht, die Standortinformationen enthält, erfasst werden, dass sie eine bestimmte Zeit lang eine voreingestellte Referenzachse überqueren.

4. Verfahren nach Anspruch 1, wobei die erste Nachricht ferner eine zweite Zeitlücke enthält, die basierend auf dem ersten Verhältnis bestimmt wird, wobei die zweite Zeitlücke eine Grundlage für das Bestimmen eines Bremswegs in Bezug auf das elektronische Notbremslicht, EEBL, ist.

5. Verfahren nach Anspruch 1, wobei die erste Nachricht ferner Informationen über eine dritte Zeitlücke enthält, die basierend auf dem ersten Verhältnis bestimmt wird, wobei die dritte Zeitlücke eine Grundlage für das Bestimmen eines Abstands in Bezug auf die Annahme einer Spurwechselanforderung zwischen den V2X-Fahrzeugen ist.

6. Verfahren nach Anspruch 1, wobei der Abstand zwischen den V2X-Fahrzeugen ein Abstand zwischen V2X-Fahrzeugen ist, die Platooning durchführen.

7. Verfahren nach Anspruch 1, wobei die erste Nachricht Informationen über eine Dauer enthält, für die das erste Verhältnis gültig ist, wobei die Dauer basierend auf einer Änderungsrate des ersten Verhältnisses festgelegt wird.

8. Verfahren nach Anspruch 1, wobei die erste Vorrichtung eine straßenseitige Einheit (RSU) ist, die an einem bestimmten Standort oder einem SoftV2X-Server befestigt ist.

9. Verfahren zum Steuerndes Fahrens von Vehicle-to-Everything, V2X,-Fahrzeugen durch eine zweite Vorrichtung in einem drahtlosen Kommunikationssystem, das Sidelink unterstützt, wobei das Verfahren Folgendes umfasst:

   Empfangen einer ersten Nachricht, die Informationen über ein erstes Verhältnis enthält;
   Bestimmen eines ersten Trennungsabstands zu einem vorausfahrenden Fahrzeug basierend auf dem ersten Verhältnis; und
   Steuern des Fahrens der V2X-Fahrzeuge, um den ersten Trennungsabstand einzuhalten, wobei das erste Verhältnis basierend auf der Anzahl der erfassten benachbarten Fahrzeuge und der Anzahl der durch eine V2X-Nachricht identifizierten V2X-Fahrzeuge berechnet wird.

10. Verfahren nach Anspruch 9, wobei die zweite Vorrichtung basierend auf dem ersten Verhältnis einen Bremsweg in Bezug auf das elektronische Notbremslicht, EEBL, festlegt.

11. Verfahren nach Anspruch 9, wobei die zweite Vorrichtung basierend auf dem ersten Verhältnis einen Trennungsabstand zu einem vorausfahrenden Fahrzeug zum Annehmen einer Spurwechselanforderung von einem anderen V2X-Fahrzeug festlegt.

12. Erste Vorrichtung zum Steuern des Fahrens von Vehicle-to-Everything, V2X,-Fahrzeugen in einem drahtlosen Kommunikationssystem, das Sidelink unterstützt, wobei die erste Vorrichtung Folgendes umfasst:

   einen Hochfrequenz, HF,-Sendeempfänger; und
   einen Prozessor, der mit dem HF-Sendeempfänger verbunden ist;
   wobei der Prozessor für Folgendes konfiguriert ist:

   Erfassen benachbarter Fahrzeuge durch einen Sensor; und
   Steuern des HF-Sendeempfängers, um:

   regelmäßig eine V2X-Nachricht von jedem der V2X-Fahrzeuge zu empfangen; und
   eine erste Nachricht zu senden, die Informationen über ein erstes Verhältnis enthält,
   das basierend auf der V2X-Nachricht und einem Ergebnis der Erfassung berechnet wurde,
   wobei das erste Verhältnis basierend auf der Anzahl der erfassten benachbarten Fahrzeuge und der Anzahl der durch die V2X-Nachricht identifizierten V2X-Fahrzeuge berechnet wird,
   wobei die erste Nachricht ferner Informationen über eine erste Zeitlücke zum Steuern eines basierend auf dem ersten Verhältnis festgelegten Abstands zwischen den V2X-Fahrzeugen enthält.

13. Zweite Vorrichtung zum Steuern des Fahrens von Vehicle-to-Everything, V2X,-Fahrzeugen in einem drahtlosen Kommunikationssystem, das Sidelink unterstützt, wobei die zweite Vorrichtung Folgendes umfasst:

   einen Hochfrequenz, HF,-Sendeempfänger; und

einen Prozessor, der mit dem HF-Sendeempfänger verbunden ist,
wobei der Prozessor für Folgendes konfiguriert ist:

Steuern des HF-Sendeempfängers, um eine erste Nachricht zu empfangen, die Informationen über ein erstes Verhältnis enthält;
Bestimmen eines ersten Trennungsabstands zu einem vorausfahrenden Fahrzeug basierend auf dem ersten Verhältnis; und
Steuern des Fahrens der V2X-Fahrzeuge, um den ersten Trennungsabstand einzuhalten, wobei das erste Verhältnis basierend auf der Anzahl der erfassten benachbarten Fahrzeuge und der Anzahl der durch eine V2X-Nachricht identifizierten V2X-Fahrzeuge berechnet wird

14. Computerlesbares Speichermedium, das mindestens ein Computerprogramm zum Steuern des Fahrens von Vehicle-to-Everything(V2X)-Fahrzeugen durch mindestens einen Prozessor in einem drahtlosen Kommunikationssystem, das Sidelink unterstützt, enthält, wobei das Speichermedium Folgendes umfasst:

mindestens ein Computerprogramm, das so konfiguriert ist, dass es den mindestens einen Prozessor dazu veranlasst, einen Vorgang des Steuerns des Fahrens der V2X-Fahrzeuge durchzuführen; und
ein computerlesbares Speichermedium, das das mindestens eine Computerprogramm speichert, wobei der Vorgang Folgendes umfasst:

Erfassen benachbarter Fahrzeuge durch einen Sensor;
periodisches Empfangen einer V2X-Nachricht von jedem der V2X-Fahrzeuge; und
Senden einer ersten Nachricht, die Informationen über ein erstes Verhältnis enthält, das basierend auf der V2X-Nachricht und einem Ergebnis der Erfassung berechnet wurde,
wobei das erste Verhältnis basierend auf der Anzahl der erfassten benachbarten Fahrzeuge und der Anzahl der durch die V2X-Nachricht identifizierten V2X-Fahrzeuge berechnet wird,
wobei die erste Nachricht ferner Informationen über eine erste Zeitlücke zum Steuern eines basierend auf dem ersten Verhältnis festgelegten Abstands zwischen den V2X-Fahrzeugen enthält.

**Revendications**

1. Procédé de contrôle de la conduite de véhicules de véhicule à tout, V2X, par un premier dispositif dans un système de communication sans fil prenant en charge une liaison latérale, le procédé comprenant :

la détection de véhicules adjacents au moyen d'un capteur ;
la réception périodique d'un message V2X à partir de chacun des véhicules V2X ; et
l'émission d'un premier message contenant des informations sur un premier rapport calculé sur la base du message V2X et d'un résultat de la détection,
dans lequel le premier rapport est calculé sur la base du nombre des véhicules adjacents détectés et du nombre de véhicules V2X identifiés par le message V2X,
dans lequel le premier message contient en outre des informations sur un premier intervalle de temps pour contrôler une distance entre les véhicules V2X définie sur la base du premier rapport.

2. Procédé selon la revendication 1, dans lequel le nombre des véhicules V2X est calculé sur la base du message V2X contenant des informations de localisation correspondant à une zone prédéfinie pour un temps spécifique,
dans lequel le temps spécifique est déterminé sur la base de la périodicité d'émission du message V2X.

3. Procédé selon la revendication 1, dans lequel le nombre des véhicules V2X correspond au nombre de véhicules détectés pour passer sur un axe de référence prédéfini pendant un temps spécifique sur la base du message V2X contenant des informations de localisation.

4. Procédé selon la revendication 1, dans lequel le premier message contient en outre un deuxième intervalle de temps déterminé sur la base du premier rapport, le deuxième intervalle de temps étant une base pour déterminer une distance de freinage liée au feu stop électronique d'urgence, EEBL.

5. Procédé selon la revendication 1, dans lequel le premier message contient en outre des informations sur un troisième intervalle de temps déterminé sur la base du premier rapport, le troisième intervalle de temps étant une base pour déterminer une distance liée à l'acceptation d'une requête de changement de voie entre les véhicules V2X.

6. Procédé selon la revendication 1, dans lequel la distance entre les véhicules V2X est une distance entre des véhicules V2X réalisant une circulation en peloton.

7. Procédé selon la revendication 1, dans lequel le premier message contient des informations sur une durée pendant laquelle le premier rapport est valide, la durée étant définie sur la base d'un taux de variation du premier rapport.

8. Procédé selon la revendication 1, dans lequel le premier dispositif est une unité de bord de route (RSU) fixée à un emplacement spécifique ou un serveur SoftV2X.

9. Procédé de contrôle de la conduite de véhicules de véhicule à tout, V2X, par un second dispositif dans un système de communication sans fil prenant en charge une liaison latérale, le procédé comprenant :

la réception d'un premier message contenant des informations sur un premier rapport ;
la détermination d'une première distance de séparation par rapport à un véhicule précédent sur la base du premier rapport ; et
le contrôle de la conduite des véhicules V2X pour maintenir la première distance de séparation, dans lequel le premier rapport est calculé sur la base du nombre des véhicules adjacents détectés et du nombre de véhicules V2X identifiés par un message V2X.

10. Procédé selon la revendication 9, dans lequel le second dispositif règle une distance de freinage liée au feu stop électronique d'urgence, EEBL, sur la base du premier rapport.

11. Procédé selon la revendication 9, dans lequel le second dispositif règle une distance de séparation par rapport à un véhicule précédent pour accepter une requête de changement de voie provenant d'un autre véhicule V2X sur la base du premier rapport.

12. Premier dispositif pour le contrôle de la conduite de véhicules de véhicule à tout, V2X, dans un système de communication sans fil prenant en charge une liaison latérale, le premier dispositif comprenant :

un émetteur-récepteur radiofréquence, RF ; et
un processeur connecté à l'émetteur-récepteur RF ;
dans lequel le processeur est configuré pour :

détecter des véhicules adjacents au moyen d'un capteur ; et
contrôler l'émetteur-récepteur RF pour :

recevoir périodiquement un message V2X à partir de chacun des véhicules V2X ; et
émettre un premier message contenant des informations sur un premier rapport calculé sur la base du message V2X et d'un résultat de la détection,
dans lequel le premier rapport est calculé sur la base du nombre des véhicules adjacents détectés et du nombre de véhicules V2X identifiés par le message V2X,
dans lequel le premier message contient en outre des informations sur un premier intervalle de temps pour contrôler une distance entre les véhicules V2X définie sur la base du premier rapport.

13. Second dispositif pour le contrôle de la conduite de véhicules de véhicule à tout, V2X, dans un système de communication sans fil prenant en charge une liaison latérale, le second dispositif comprenant :

un émetteur-récepteur radiofréquence, RF ; et
un processeur connecté à l'émetteur-récepteur RF,
dans lequel le processeur est configuré pour :

contrôler l'émetteur-récepteur RF pour recevoir un premier message contenant des informations sur un premier rapport ;
déterminer une première distance de séparation par rapport à un véhicule précédent sur la base du premier rapport ; et
contrôler la conduite des véhicules V2X pour maintenir la première distance de séparation, dans lequel le premier rapport est calculé sur la base du nombre des véhicules adjacents détectés et du nombre de véhicules V2X identifiés par un message V2X.

14. Support de stockage lisible par ordinateur comportant au moins un programme informatique pour le contrôle de la conduite de véhicules de véhicule à tout (V2X) par au moins un processeur dans un système de communication sans fil prenant en charge une liaison latérale, le support de stockage comprenant :

au moins un programme informatique configuré pour amener l'au moins un processeur à réaliser une opération de contrôle de la conduite des véhicules V2X ; et
un support de stockage lisible par ordinateur stockant l'au moins un programme informatique, dans lequel l'opération comprend :

la détection de véhicules adjacents au moyen d'un capteur ;
la réception périodique d'un message V2X à partir de chacun des véhicules V2X ; et
l'émission d'un premier message contenant des informations sur un premier rapport calculé sur la base du message V2X et d'un résultat de la détection,
dans lequel le premier rapport est calculé sur la base du nombre des véhicules adjacents détectés et du nombre de véhicules V2X identifiés par le message V2X,
dans lequel le premier message contient en outre des informations sur un premier intervalle de temps pour contrôler une distance entre les véhicules V2X définie sur la base du premier rapport.

# FIG. 1

# FIG. 2

# FIG. 3

# FIG. 4

| ... | One Frame (10ms) | ... |

| ... | Half-Frame (5ms) | Half-Frame (5ms) | ... |

| ... | Subframe 0 (1ms) | ... | Subframe 4 (1ms) | Subframe 5 (1ms) | ... | Subframe 9 (1ms) | ... |

Subframe (1ms)

| 15KHz | Slot 0 (14symbols) |
| --- | --- |

1ms

| 30KHz | Slot 0 (14symbols) | Slot 1 |
| --- | --- | --- |

500us

| 60KHz | Slot 0 (14symbols) | Slot 1 | Slot 2 | Slot 3 |
| --- | --- | --- | --- | --- |

250us

| 120KHz | Slot 0 (14symbols) | Slot 1 | Slot 2 | Slot 3 | Slot 4 | Slot 5 | Slot 6 | Slot 7 |
| --- | --- | --- | --- | --- | --- | --- | --- | --- |

125us

# FIG. 5

# FIG. 6

UE A | UE B

SDAP ←→ SDAP

PDCP ←→ PDCP

RLC ←→ RLC

MAC ←→ MAC

PHY ←→ PHY

PU5-U

(a)

UE A | UE B

RRC ←→ RRC

PDCP ←→ PDCP

RLC ←→ RLC

MAC ←→ MAC

PHY ←→ PHY

PU5-U

(b)

# FIG. 7

BS (e.g. eNB or gNB)

UE1   UE2

# FIG. 8

Frequency

| Unit #(N$_F$-1) | Unit #(2N$_F$-1) | | Unit #(N$_F$*N$_T$-1) | Unit #(N$_F$-1) |
|---|---|---|---|---|
| ⋮ | | | ⋮ | |
| Unit #1 | Unit #(N$_F$+1) | ⋯ | Unit #(N$_F$*N$_T$-N$_F$+1) | Unit #1 |
| Unit #0 | Unit #N$_F$ | | Unit #(N$_F$*N$_T$-N$_F$) | Unit #0 |

Time

D2D signal transmission
from a UE allocated with unit #0

D2D signal transmission
from a UE allocated with unit #0

FIG. 9

# FIG. 10

C-V@X (LTE-V2X) in EU

| Applications |
|---|

| Management | Facilities | Security (ETSI TS 102 940,...) |
|---|---|---|

Facilities:
- Requirements & Profile (ETSI EN 302 637, ...)
- Message Dictionary (ETSI EN 102 894-2)

| BTP (ETSI EN 302 636-5) | UDP/TCP/others |
|---|---|
| GeiNetworking (ETSI EN 302 636-4) | IPv6 |

| ProSe Signaling | NON-IP |
|---|---|
| | PDCP |
| | RLC |
| MAC | |
| PHY | |

C-V@X (LTE-V2X) in US

| Applications |
|---|

| Management | Facilities | Security (IEEE 1609.2) |
|---|---|---|

Facilities:
- Requirements & Profile (SAE J3161, ...)
- Message Dictionary (SAE J2735)

| WSMP (IEEE 1609.3) | UDP/TCP/others |
|---|---|
| | IPv6 |

| ProSe Signaling | NON-IP |
|---|---|
| | PDCP |
| | RLC |
| MAC | |
| PHY | |

# FIG. 11

# FIG. 12

# FIG. 13

(a)                                              (b)

# FIG. 14

Detected Object

$RV_3$  $RV_2$  $RV_1$

Received Object

$RV_5$  $RV_4$

$RV_6$

Check Point

$RV_7$

$RV_8$

$RV_9$

$RV_{11}$  $RV_{10}$

$RV_{13}$  $RV_{12}$  $RV_{14}$

(a)

RSU

$[x_{v1}^{t1} y_{v1}^{t1}]$

$[CP_x, CP_y]$

t1 time

$[x_{v1}^{t2} y_{v1}^{t2}]$

t2 time

$x_{v1}^{t1} < x$ Check Point

$x_{v1}^{t1} > x$ Check Point

Check Point Line
(X Axis = Vx)

(b)

FIG. 15

| RSM |
|---|

| RSM mandatory | RSM optional | Penetration ratio Container |
|---|---|---|

## FIG. 16

FIG. 17

# FIG. 18

High penetration Ratio

(a)

Low penetration Ratio

(b)

FIG. 19

# FIG. 20

SoftV2X Server 410

PR ratio = 80%

100

Smart RSU

210

230

220

Accept

Lane Change Request

High penetration Ratio

(a)

SoftV2X Server 410

PR ratio = 80%

100

Smart RSU

210

230

220

reject

Lane Change Request

Low penetration Ratio

(b)

EP 4 243 464 B1

FIG. 21

| Sensing a adjacent object or adjacent vehicle | ~ S201 |

| Receiving V2X messages from V2X vehicles | ~ S203 |

| Calculating a Penetration Ratio | ~ S205 |

| Transmitting a first message including the pentration rate | ~ S207 |

FIG. 22

| | |
|---|---|
| Receiving a first message including a pentration rate | ~ S301 |

$\downarrow$

| | |
|---|---|
| Determining a first separation distance from the preceding vehicle | ~ S303 |

$\downarrow$

| | |
|---|---|
| Controlling the driving of the V2X vehicle based on the first separation distance | ~ S305 |

# FIG. 23

<u>1</u>

# FIG. 24

# FIG. 25

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

FIG. 26

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

**EP 4 243 464 B1**

**Patent documents cited in the description**

- US 2020094827 A